# EUROPEAN PATENT APPLICATION

(11) **EP 4 481 853 A1**
(43) Date of publication of application: **25.12.2024**
(21) Application number: 23756053.7
(22) Date of filing: 16.01.2023
(51) Int. Cl.: H01M 4/525, H01M 4/36

(54) **METHOD OF PROCESSING POSITIVE ELECTRODE ACTIVE MATERIAL PARTICLES, AND POSITIVE ELECTRODE ACTIVE MATERIAL AND NON-AQUEOUS ELECTROLYTE SECONDARY BATTERY USING SAME**

(30) Priority: 15.02.2022 JP 2022021270
(71) Applicant: BASF SE, 67056 Ludwigshafen am Rhein (DE)
(72) Inventor: KASHIWAGI, Junji, Sanyoonoda-shi, Yamaguchi 756-0847 (JP); KOGA, Kazumichi, Sanyoonoda-shi, Yamaguchi 756-0847 (JP); MORITA, Daisuke, Sanyoonoda-shi, Yamaguchi 756-0847 (JP)
(74) Representative: Meissner Bolte Partnerschaft mbB
(86) International application number: PCT/JP2023/000944
(87) International publication number: WO 2023/157525

(57) **Abstract**

This invention provides a method for treating positive electrode active material particles comprising steps of a lithium-nickel composite is introduced into water and stirred to prepare a slurry; an aluminum-containing solution is dripped onto the slurry while the slurry is stirred; the slurry on which the aluminum-containing solution has been dripped is filtered to obtain a cake-like compound; and the cake-like compound is dried by performing a heat treatment, and a Li-Al hydroxide coating layer is formed on surfaces of secondary particles of the lithium-nickel composite, and at least part of grain boundary portions formed by adjacent primary particles located on the outermost surface, among a plurality of primary particles constituting the secondary particles, and thus possible to restrict any more cracking of particles than necessary and to control the amount of residual lithium, and a deterioration in battery characteristics can be restricted, even with repeated use over long time.

## Description

### TECHNICAL FIELD

The present invention relates to a method for treating positive electrode active material particles, and to a positive electrode active material and a nonaqueous electrolyte secondary battery employing same.

### BACKGROUND

Nonaqueous secondary batteries, which are compact, lightweight and have a high energy density, are used as power sources for driving cellular telephones and notebook personal computers, etc. Among these, widespread use is made of lithium ion secondary batteries which have a large charging/discharging capacity and employ a material such as lithium cobalt oxide or lithium nickel oxide in a positive electrode.

Nickel-cobalt-manganese (NCM)-based positive electrode active materials, in which a portion of the nickel is substituted with cobalt and manganese is introduced, and nickel-cobalt-aluminum (NCA)-based positive electrode active materials, in which a portion of the nickel is substituted with cobalt and aluminum is introduced, are used as positive electrode active materials for lithium ion secondary batteries, for example. However, when a lithium ion secondary battery employing this kind of positive electrode active material is repeatedly used over a long period of time, cracking of particles of the positive electrode active material (cracking from grain boundary portions) occurs, and gas is produced, thereby causing a deterioration in battery characteristics such as initial discharging capacity, initial charging/discharging efficiency, and cycle characteristics.

Various methods have therefore been proposed for producing positive electrode active materials by surface treating the positive electrode active material particles, in an attempt to suppress cracking of the particles as described above.

Patent Document 1 describes a method for producing a positive electrode active material, the method comprising: a step of preparing a fired powder of a lithium-nickel composite oxide; and a step of wetting the fired powder by adding a lithium aluminate aqueous solution to the fired powder of the lithium-nickel composite oxide and then drying the materials, wherein the lithium aluminate aqueous solution is prepared by adding 1.2-3.0 times the neutralization equivalent of lithium hydroxide to a water-soluble aluminum salt aqueous solution.

Patent Document 2 describes a method for producing a positive electrode active material, the method comprising, in succession: a step of preparing a fired powder of a lithium-nickel composite oxide comprising primary particles and secondary particles formed by agglomeration of the primary particles; a step of forming a slurry so that an amount of the fired powder is 1000 g-2000 g with respect to 1 L of water, and obtaining a washed cake by subjecting the fired powder to a water washing treatment; a step of admixing an aluminum compound with the washed cake to produce a mixture; and a step of causing an Li-Al compound to form on primary particle surfaces of the fired powder.

Patent Document 3 describes a method in which positive electrode active material particles are added to a solution produced by dissolving aluminum isopropoxide and lithium hydroxide (LiOH) in a solvent, and stirred and dispersed therein, after which the solution is filtered and dried to produce a mixture comprising: positive electrode active material particles having at least a portion of the surfaces thereof covered with LiₓAl₂(OH)_{7-y}•zH₂O, and LiₓAl₂(OH)_{7-y}•zH₂O not covering the surfaces of the positive electrode active material particles.

Patent Document 4 describes a method for producing a positive electrode active material, the method comprising, in succession: a step of preparing a fired powder of a lithium-nickel composite oxide comprising primary particles and secondary particles formed by agglomeration of the primary particles; a step of forming a slurry so that an amount of the fired powder is 1000 g-2000 g with respect to 1 L of water, and obtaining a washed cake by subjecting the fired powder to a water washing treatment; a step of admixing an aluminum compound and a tungsten compound with the washed cake to produce a mixture; and a step of causing an Li-Al compound and an Li-W compound to form on primary particle surfaces of the fired powder.

### [Prior Art Documents]

### [Patent Documents]

[Patent Document 1] JP 2019-040844 A
[Patent Document 2] WO 2019/044337 A1
[Patent Document 3] JP 6524988 B2
[Patent Document 4] WO 2019/044338 A1

### [Non-Patent Documents]

[Non-Patent Document 1] Analele Universitatii din Bucuresti-Chimie, Anul XIV (serie noua), vol. I-II, pp. 65-72

### SUMMARY OF THE INVENTION

### [Problems to be Solved by the Invention]

Patent Document 1 indicates that, when the lithium aluminate aqueous solution is spray-added to the fired powder of the lithium-nickel composite oxide and mixed and dried, an Li-Al compound is formed on primary particle surface layers within the secondary particles, and Li diffusion at the interface can be increased, and the Li-Al compound can be adjusted according to the amount of residual lithium in the final target product.

However, after the lithium aluminate aqueous solution has been sprayed, a state of adhesion of Li and Al to the particles, and an Li/AI ratio are unclear, and places of excess Li and places of excess Al are locally formed on the primary particle surface layers, and cracking of the particles in the positive electrode active material particles as a whole is not adequately suppressed.

Patent Document 2 indicates that the fired powder of the lithium-nickel composite oxide is washed with water so that an Li fraction remains to a suitable extent, and the aluminum compound is dry-added to the washed cake thereof and heat-treated, whereby the Li-Al compound is formed on the primary particle surface layer portions, and Li diffusion at the interface can be increased.

However, since addition of the aluminum compound to the washed cake obtained by water washing the fired powder comprises dry-addition to the powder, this produces localized Al in the primary particle surface layer portions and enlargement of particles. Furthermore, even when the aluminum compound is dry-added to the washed cake, the aluminum compound does not diffuse as far as the grain boundary portions within the secondary particles, so the effect of suppressing particle cracking is inadequate.

Patent Document 3 indicates that the presence of LiₓAl₂(OH)_{7-y}•zH₂O on at least part of the surfaces of the positive electrode active material particles suppresses heat release by the positive electrode active material particles and improves thermal stability because Li-Al compounds are endothermic.

However, the simple presence of LiₓAl₂(OH)_{7-y}•zH₂O on at least part of the surfaces does not make it possible to reduce overall resistance of the positive electrode active material particles, and does not make it possible to adequately suppress cracking of the particles.

Patent Document 4 indicates that the fired powder of the lithium-nickel composite oxide is washed with water, an aluminum compound and a tungsten compound are dry-added to the washed cake thereof, and a heat treatment is performed at 100-600°C, whereby the surface layers of the positive electrode active material particles are covered with an Li-Al compound (oxide) and an Li-W compound (oxide) having high Li ion conductivity in the form of sub-micronic fine particles, and the resistance of the positive electrode active material particles is reduced.

However, even if the aluminum compound is dry-added to the washed cake obtained by water washing the fired powder, not all of the aluminum compound dissolves, which leads to the presence of both Li-Al compounds and Al compounds, and islands on the primary particle surface layer portions, and, additionally, the excess Li fraction contained in the washed cake between the Al and W is uneven and insufficient, and therefore W is distributed in Li-W compounds and W compounds, for example, and the effect thereof cannot be achieved, so the effect of suppressing particle cracking is inadequate.

The present invention has been devised in light of the problems in the prior art as described above, and the objective thereof lies in providing a method for treating positive electrode active material particles, which makes it possible to suppress any more cracking than necessary of secondary particles (cracking from the grain boundary portions) and to control the amount of residual lithium, and which is capable of suppressing an increase in reaction resistance, even with repeated charging and discharging over a long period of time, so that a deterioration in battery characteristics, such as cycle retention rate, of a nonaqueous electrolyte secondary battery can be suppressed; and also in providing a positive electrode active material and a nonaqueous electrolyte secondary battery employing same.

### [Means for Solving the Problems]

In order to achieve the objective above, the present invention particularly constitutes a method for treating positive electrode active material particles by appropriately performing slurry formation using an aqueous solvent of a lithium-nickel composite compound and dripping of an aluminum-containing solution into the slurry, or by appropriately performing preparation of an aluminum aqueous solution and slurry formation by introducing a lithium-nickel composite compound into the aluminum aqueous solution, and covering not only surfaces of secondary particles but also specific locations within the secondary particles with a hydroxide containing lithium and aluminum.

Furthermore, in the positive electrode active material particles on which a coating layer of the hydroxide containing lithium and aluminum is formed by means of this treatment method, the coating layer is present on surfaces of secondary particles, and, additionally, the coating layer of the hydroxide containing lithium and aluminum is also present on at least part of the grain boundary portions (interfaces of the primary particles) formed by adjacent primary particles located on the outermost surface, among the plurality of primary particles constituting the secondary particles.

A method for treating positive electrode active material particles according to the present invention (also referred to below as "treatment method A") constitutes:
a method for treating positive electrode active material particles comprising a lithium-nickel composite compound having a layered rock-salt structure, which contains lithium, nickel and
oxygen, and may also contain other elements in addition to lithium, nickel and oxygen, the method being characterized by comprising at least the following steps in succession:
   (A1) a slurry formation step in which the lithium-nickel composite compound is introduced into water and stirred to prepare a slurry;
   (A2) following the slurry formation step, a dripping step in which an aluminum-containing solution is dripped onto the slurry while the slurry is stirred;
   (A3) after completion of the dripping step, a filtration step in which the slurry on which the aluminum-containing solution has been dripped is filtered to obtain a cake-like compound; and
   (A4) a heat treatment step in which the cake-like compound obtained in the filtration step is dried by performing a heat treatment,
      and
a coating layer of a hydroxide containing lithium and aluminum is formed on: (a) surfaces of secondary particles of the lithium-nickel composite compound, and
(b) at least part of grain boundary portions (interfaces of primary particles) formed by adjacent primary particles located on the outermost surface, among a plurality of primary particles constituting the secondary particles.

A method for treating positive electrode active material particles according to the present invention (also referred to below as "treatment method B") constitutes:
a method for treating positive electrode active material particles comprising a lithium-nickel composite compound having a layered rock-salt structure, which contains lithium, nickel and
oxygen, and may also contain other elements in addition to lithium, nickel and oxygen, the method being characterized by comprising at least the following steps in succession:
   (B1) a preparation step in which an aluminum compound is introduced into water and stirred to prepare an aluminum aqueous solution;
   (B2) a slurry formation step in which the lithium-nickel composite compound is introduced into the aluminum aqueous solution obtained in the preparation step and stirred to prepare a slurry;
   (B3) a filtration step in which the slurry obtained in the slurry formation step is filtered to obtain a cake-like compound; and
   (B4) a heat treatment step in which the cake-like compound obtained in the filtration step is dried by performing a heat treatment,
      and
a coating layer of a hydroxide containing lithium and aluminum is formed on: (a) surfaces of secondary particles of the lithium-nickel composite compound, and
(b) at least part of grain boundary portions (interfaces of primary particles) formed by adjacent primary particles located on the outermost surface, among a plurality of primary particles constituting the secondary particles.

A positive electrode active material according to the present invention is formed by a lithium-nickel composite compound having a layered rock-salt structure, which contains lithium, nickel and oxygen, and may also contain other elements in addition to lithium, nickel and oxygen, and
a coating layer of a hydroxide containing lithium and aluminum is formed on: (a) surfaces of secondary particles of the lithium-nickel composite compound, and
(b) at least part of grain boundary portions (interfaces of primary particles) formed by adjacent primary particles located on the outermost surface, among a plurality of primary particles constituting the secondary particles.

A nonaqueous electrolyte secondary battery according to the present invention comprises a positive electrode containing the abovementioned positive electrode active material.

### [Advantage of the Invention]

The present invention makes it possible to provide a method for treating positive electrode active material particles (treatment method A and treatment method B; these are also collectively referred to below simply as treatment methods), which makes it possible to suppress any more cracking than necessary of secondary particles (cracking from the grain boundary portions) and also to control the amount of residual lithium, and which is capable of suppressing an increase in reaction resistance, even with repeated use over a long period of time, so that a deterioration in battery characteristics, such as cycle retention rate, of a nonaqueous electrolyte secondary battery can be suppressed; and also makes it possible to provide a positive electrode active material and a nonaqueous electrolyte secondary battery employing same.

### [Brief Description of the Drawings]

[Fig. 1] is a schematic view in cross section of a surface layer of secondary particles of a lithium-nickel composite compound, in which a coating layer of a hydroxide containing lithium and aluminum is formed by means of the treatment method of the present invention.
[Fig. 2] is a graph obtained by using initial reaction resistance and reaction resistance at the 31st cycle determined in each of examples A1-1 to A1-7 and B1-1, and comparative examples 1-1 to 1-6, where the reaction resistance at the 31st cycle is plotted against the initial reaction resistance.
[Fig. 3] is a diagram showing element information from the surface layer toward the center portion (depth direction) of secondary particles of the positive electrode active material in example A1-7, obtained by means of Auger electron spectroscopy.

### [Embodiment of the Invention]

An embodiment of the present invention will be described below. The following description of a preferred embodiment is merely an illustration in essence, and is not intended to limit the present invention, methods of application thereof or usages thereof.

### <Method for treating positive electrode active material particles>

When a nonaqueous electrolyte secondary battery is repeatedly used over a long period of time, cracking is said to occur from the grain boundary portions within secondary particles of the positive electrode active material particles, and, as a result, there is a marked increase in resistance associated with deterioration of the positive electrode active material particles due, among other things, to elution of metal elements from newly-formed surfaces within the secondary particles produced by this cracking, and reactions with the electrolyte, and consequently there is a deterioration in battery characteristics of the nonaqueous electrolyte secondary battery. At the same time, it is thought that more cracking of the particles (cracking from the grain boundary portions) than necessary can be suppressed by lowering the resistance of the secondary particles, and thus a deterioration in battery characteristics can be suppressed.

Accordingly, as a method for achieving a reduction in resistance of the secondary particles of the positive electrode active material particles, the present invention elucidates a step in which, in addition to surfaces of the secondary particles, at least part of the grain boundary portions (interfaces of primary particles) formed by adjacent primary particles located on the outermost surface, among the plurality of primary particles constituting the secondary particles, is also more evenly coated with a thin film of a coating layer of a hydroxide containing lithium and aluminum (also referred to below as the "Li-Al hydroxide").

### [Treatment Method A]

Treatment method A for treating positive electrode active material particles according to the present invention constitutes a method for treating positive electrode active material particles comprising a lithium-nickel composite compound having a layered rock-salt structure, which contains lithium (Li), nickel (Ni) and oxygen (O), and may also contain other elements in addition to Li, Ni and O. The treatment method A then includes at least the following steps (A1)-(A4) in succession:
(A1) a slurry formation step in which the lithium-nickel composite compound is introduced into water and stirred to prepare a slurry;
(A2) following the slurry formation step, a dripping step in which an aluminum-containing solution is dripped onto the slurry while the slurry is stirred;
(A3) after completion of the dripping step, a filtration step in which the slurry on which the aluminum-containing solution has been dripped is filtered to obtain a cake-like compound; and
(A4) a heat treatment step in which the cake-like compound obtained in the filtration step is dried by performing a heat treatment.

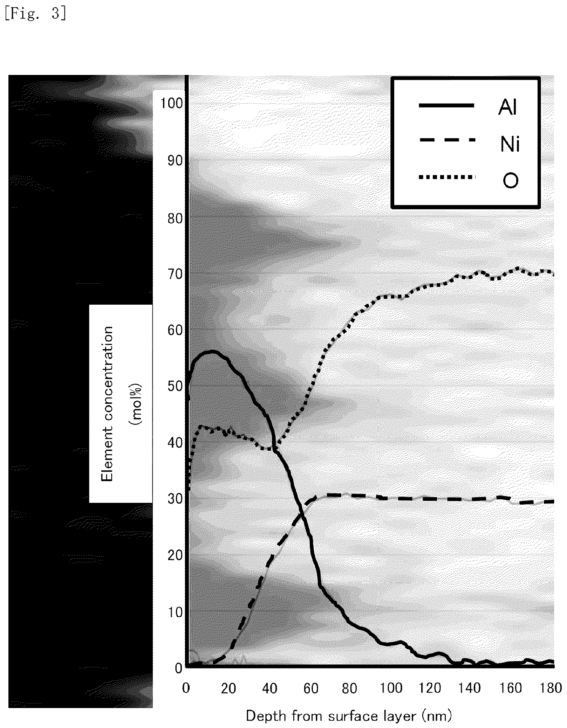

In the treatment method A comprising, in succession, at least the steps (A1)-(A4), the aluminum-containing solution which is dripped onto the slurry of the lithium-nickel composite compound immediately reacts with an Li fraction in the slurry to form an extremely fine gel, that is, the aluminum-containing solution produces a reaction that forms an Li-Al hydroxide that is so fine and dense that it is difficult to identify the primary particle size, after which the Li-Al hydroxide can be evenly, and not locally, deposited on the surface layer of secondary particles of the lithium-nickel composite compound, with stirring. Additionally, as can be confirmed in the drawing in fig. 3, which shows element information from the surface layer toward the center portion (depth direction) of the secondary particles, the extremely fine gel comprising the Li-Al hydroxide can also be deposited in gaps between the primary particles constituting the surface layer portion of the secondary particles, i.e., at the grain boundary portions.

It is thought that the effect of a binder between the primary particles at the surface layer portion of the secondary particles is produced by this coating of the very fine and dense Li-Al hydroxide, and, additionally, a reduction in resistance over the entire surface layer of the secondary particles and in individual secondary particles is achieved because of high ion conductivity, which is a feature of the Li-Al hydroxide, and the ability to trap residual Li and protons near the surface layer of the secondary particles, and a considerable effect of suppressing particle cracking can be achieved.

Furthermore, it is possible for only excess Li to be eluted while Li desorption from within the particles of the lithium-nickel composite compound is suppressed when the slurry of the lithium-nickel composite compound is formed, and moreover, a ratio of the amount of the lithium-nickel composite compound and the amount of water within the slurry is controlled so that the amount of Li eluted is controlled, and therefore it is possible to coat the surface layer of the secondary particles more evenly with the Li-Al hydroxide while Al loss is reduced by dripping the aluminum-containing solution correspondingly with the amount of Li required for the coating, and it is thought that, as a result, the amount of residual lithium in the positive electrode active material which is the final target product can be reduced, while the coating layer also has a sufficient thickness and a high coating rate, and the effect of reducing resistance of the secondary particles is increased.

The steps will be described below in order.

### (A1) Slurry formation step

In the slurry formation step (A1), a lithium-nickel composite compound is introduced into water and stirred to prepare a slurry of the lithium-nickel composite compound. In the treatment method A according to the present invention, the slurry formation step (A1) is an especially important step for adequately achieving the effect of reducing resistance of the secondary particles as described above.

The lithium-nickel composite compound used in the present invention contains Li, Ni and O, and may also contain other elements in addition to Li, Ni, and O. The lithium-nickel composite compound may have a layered rock-salt structure, but this is not particularly limiting; the lithium-nickel composite compound will be described in the subsequent description under "<Positive electrode active material>".

The slurry is prepared, for example, by introducing a predetermined amount of water, such as pure water, into a reaction tank, and introducing the lithium-nickel composite compound into this water, followed by stirring. Here, the amount of Li eluted from the secondary particles of the lithium-nickel composite compound, and the amount of residual lithium in the positive electrode active material which is the final target product can be more suitably controlled by adjusting a ratio of the amount of lithium-nickel composite compound introduced to the amount of water (also referred to below as the "solid-liquid ratio") to a suitable range so that the Al in the aluminum-containing solution which is dripped in the subsequent dripping step (A2) reacts with the Li to form the Li-Al hydroxide.

That is to say, in the slurry formation step (A1), the ratio of the amount of lithium-nickel composite compound to the amount of water (solid-liquid ratio) is preferably adjusted to 750 g/L-2000 g/L, and more preferably to 800 g/L-1800 g/L. If the solid-liquid ratio is below the lower limit value, then there is an excessively large amount of water and Li also elutes from within the secondary particles of the lithium-nickel composite compound, which risks leading to a reduction in quality of the positive electrode active material which is the final target product. Furthermore, if the solid-liquid ratio is above the upper limit value, there is an excessively small amount of water and a greater amount of residual lithium than required in the surface layer of the secondary particles, which risks making it difficult to suitably control the amount of residual lithium in the positive electrode active material which is the final target product.

Furthermore, the lithium-nickel composite compound is introduced into the water and stirred to thereby prepare the slurry, and, by adjusting the stirring time, it is possible to cause sufficient Li to elute into the slurry in the required amount from the secondary particles of the lithium-nickel composite compound, which can afford greater stability.

That is to say, in the slurry formation step (A1), the slurry is preferably prepared by stirring, with the stirring time being adjusted to 3 minutes-30 minutes, and more preferably to 5 minutes-25 minutes. If the stirring time is below the lower limit value, the amount of Li expected to elute from the secondary particles of the lithium-nickel composite compound will become smaller, which risks increasing the amount of residual lithium. Furthermore, if the stirring time is above the upper limit value, there is no further improvement in the advantage associated with slurry preparation, and there is a risk of reduced producibility.

It should be noted that there is no particular limitation as to the temperature of the water into which the lithium-nickel composite compound is introduced, but the water temperature is preferably adjusted to around 15°C-35°C, for example, in order to prepare a suitable slurry, as mentioned above.

In the slurry formation step (A1), if the lithium-nickel composite compound is represented by the formula: LiₓNiO₂, for example, then the following [Reaction α] proceeds.

[Reaction α] LiₓNiO₂→Li_{x-y}NiO₂+yLiOHaq

### (A2) Dripping step

In the dripping step (A2), following the slurry formation step (A1), an aluminum-containing solution is dripped onto the slurry while the slurry is stirred. In the treatment method A according to the present invention, the dripping step (A2) is an especially important step, together with the slurry formation step (A1), for adequately achieving the effect of reducing resistance of the secondary particles as described above.

In the dripping step (A2), the slurry onto which the aluminum-containing solution is dripped is preferably alkaline to ensure that Li does not elute from the secondary particles of the lithium-nickel composite compound, but if the Li-Al hydroxide is to be formed by precipitating Al, which is an amphoteric element, in the form of a gel in an alkaline slurry, then Al which cannot precipitate remains in the slurry and is ultimately discarded without having been able to precipitate, so not only is the amount of coating less than expected, there is also loss of Al and Li. To reduce the amount of Al which is discarded, the aluminum-containing solution which is dripped onto the slurry is preferably an acidic solution, and examples of acidic solutions that may be cited include aluminum sulfate aqueous solution, aluminum nitrate aqueous solution, and aluminum acetate aqueous solution, etc.

As indicated above, when the aluminum-containing solution is dripped onto the slurry, the Al immediately precipitates in the form of a gel to form the Li-Al hydroxide, so the surface layer region of the secondary particles can be more evenly coated with the Li-Al hydroxide by suitably adjusting the aluminum concentration of the aluminum-containing solution and the amount of aluminum which is dripped.

That is to say, in the dripping step (A2), the amount of aluminum in the aluminum-containing solution which is dripped is preferably 0.01 mol%-1.5 mol%, and more preferably 0.05 mol%-1.0 mol%. If the amount of aluminum which is dripped is below the lower limit value, then the gel-form Li-Al hydroxide particles are excessively small, and there is a risk of increasing the amount of Li-Al hydroxide that cannot be coated on the secondary particles of the lithium-nickel composite compound. Furthermore, if the amount of aluminum which is dripped is above the upper limit value, then the gel-form Li-Al hydroxide particles are excessively large and may not be refined even with stirring, which produces a risk of localized coating of the surface layer of the secondary particles. It should be noted that the aluminum concentration of the aluminum-containing solution is preferably around 0.1 mol/L-2.5 mol/L.

As a result of investigations carried out in the present invention, it also became clear that the amount of Li that elutes into the slurry when the aluminum-containing solution is dripped in the dripping step (A2), with the aluminum concentration and amount of aluminum which is dripped being adjusted as described above, for example, is related to the electrical conductivity of the slurry. By controlling the electrical conductivity of the slurry, the ratio (Li/AI) of Li and Al which react to form the Li-Al hydroxide, and the amount of residual lithium in the positive electrode active material which is the final target product can be determined from the solid-liquid ratio and the stirring time in the slurry formation step (A1).

That is to say, the electrical conductivity of the slurry when the aluminum-containing solution is dripped is preferably 10 mS/cm-100 mS/cm, and more preferably 20 mS/cm-80 mS/cm. If the electrical conductivity is below the lower limit value, then a smaller amount of Li elutes into the slurry, and there is a risk that the expected amount of Li-Al hydroxide will not be formed. Furthermore, if the electrical conductivity is above the upper limit value, an excessively large amount of Li elutes into the slurry, and there is a risk of a reduction in quality of the secondary particles of the lithium-nickel composite compound.

Moreover, the ratio of Li and Al which react to form the Li-Al hydroxide as described above (the ratio of Li and Al in the slurry onto which the aluminum-containing solution has been dripped; Li/AI, molar ratio) is preferably 0.5-50, and more preferably 2-30, for example. It should be noted that Li/AI is a value obtained by using the Li amount and Al amount quantitatively determined in accordance with the measurement method in "<Composition of precursor composite compound and positive electrode active material>" which will be described later.

In the dripping step (A2), when the aluminum-containing solution is assumed to be an aluminum sulfate (Al₂(SO₄)₃) aqueous solution, for example, then [Reaction β] below proceeds, following abovementioned [Reaction α].

[Reaction β] yLiOHaq+z(Al₂(SO₄)₃)aq→zLiAl₂(OH)₇•2H₂O+(y-z)LiOHaq

### (A3) Filtration step

In the filtration step (A3), after completion of the dripping step (A2), the slurry onto which the aluminum-containing solution has been dripped is filtered using a filtration device, etc., such as a Büchner funnel or a filter press, for example, to obtain a cake-like compound.

The moisture content of the cake-like compound does not affect formation of the final Li-Al hydroxide coating layer and is not particularly limited, but when a compound containing an element X (also referred to below as the "X compound"), such as tungsten (W), boron (B), zirconium (Zr), phosphorus (P), sulfur (S), niobium (Nb), magnesium (Mg), cobalt (Co), manganese (Mn), molybdenum (Mo), titanium (Ti), or strontium (Sr), for example, is added to the cake-like compound, as will be described later, the moisture content is preferably around 3 wt%-10 wt% from the point of view of facilitating mixing of the cake-like compound and the X compound.

In the treatment method A of the present invention, the X compound is preferably added to the cake-like compound after the filtration step (A3), as mentioned above. By adding this X compound, a portion thereof forms a compound containing lithium and the element X (also referred to below as the "Li-X compound") by reaction of Li and the element X, and a portion thereof can coat the surface layer of the secondary particles and the interior of the secondary particles of the lithium-nickel composite compound in the form of the X compound or an X oxide. The coating layer of the Li-X compound and X compound which is formed further enhances the effect of reducing resistance of the secondary particles, in conjunction with the Li-Al hydroxide coating layer, cracking of particles can be further suppressed, and thus a deterioration in battery characteristics can further be suppressed.

The element X constituting the X compound is preferably an element that reacts with Li to form a glass-like compound, or a transition element of higher valence, for example, and the X compound may be various types of oxides, various types of chlorides, or various types of oxoacids, etc. of such an element X, but there is no particular limitation. Examples of X compounds that may be cited include compounds in which the element X is W, such as tungsten oxide and tungsten chloride; compounds in which the element X is B, such as boric acid and boron oxide; compounds in which the element X is Zr, such as zirconium oxide and zirconium chloride; and compounds in which the element X is Nb, such as niobium oxide and niobium chloride.

It should be noted that there is no particular limitation as to the form of the X compound added to the cake-like compound, provided that the cake-like compound and the X compound can be uniformly mixed, and forms such as a powder, solution and colloid may be suitably adopted, depending on the type of X compound.

Furthermore, there is no particular limitation as to the amount of the element X which is added, provided that a coating layer of the intended Li-X compound is formed, and the amount thereof may be suitably adjusted depending on the type of element X. For example, when the element X is W, then the amount of tungsten which is added is preferably 0.01 mol%-0.3 mol%, and when the element X is B, the amount of boron which is added is preferably 0.1 mol%-2.0 mol%.

If the X compound is added to the cake-like compound after the filtration step (A3), when the X compound is assumed to be tungsten oxide (WO₃), for example, then [Reaction δ] below proceeds based on the lithium hydroxide (LiOH) aqueous solution obtained in abovementioned [Reaction β]. However, this does not apply to the compound formed by the temperature of the final heat treatment.

[Reaction δ] (y-z)LiOHaq+(moisture in cake-like compound)+tWO₃→tLi₂WO₄

It should be noted that the X compound is preferably added to the cake-like compound after the filtration step (A3), as mentioned above, but the time at which the X compound is added, when it is used, is not limited to after the filtration step (A3), and the time may be freely determined in the treatment method A according to the present invention.

For example, the X compound in the form of a solution or a colloid, etc. may also be dripped when the aluminum-containing solution is dripped onto the slurry while the slurry is being stirred in the dripping step (A2), in addition to the X compound being added after the filtration step (A3) as described above. Furthermore, there is no particular limitation as to the amount of the element X which is added, provided that a coating layer of the intended Li-X compound is formed, and the amount thereof may be suitably adjusted depending on the type of element X, in the same way as when the X compound is added after the filtration step (A3), for example.

For example, even if the X compound in the form of a solution or a colloid, etc. is dripped in the dripping step (A2), a portion thereof forms the Li-X compound and a portion thereof can coat the surface layer of the secondary particles and the interior of the secondary particles of the lithium-nickel composite compound in the form of the X compound or an X oxide, and the coating layer of the Li-X compound and X compound which is formed further enhances the effect of reducing resistance of the secondary particles, in conjunction with the Li-Al hydroxide coating layer, cracking of particles can be further suppressed, and thus a deterioration in battery characteristics can further be suppressed.

### (A4) Heat treatment step

In the heat treatment step (A4), the cake-like compound obtained in the filtration step (A3) is dried by performing a heat treatment.

The heat treatment is preferably performed to an extent that the Li-Al hydroxide coating layer which is formed may be present as a single phase, i.e., until the Li-Al hydroxide is, as far as possible, no longer in the state of a hydrate, and is also preferably performed to an extent that the Li-Al hydroxide is not dehydrated to become an oxide.

When the heat treatment is performed as described above, the temperature is preferably set at 120°C-350°C, and more preferably at 140°C-320°C, with reference to Non-Patent Document 1, for example. If this temperature is below the lower limit value, the Li-Al hydroxide is likely to be in a hydrate state, and the secondary particles of the lithium-nickel composite compound having the Li-Al hydroxide coating layer formed thereon are at risk of gelation. Additionally, the amount of moisture contained in the actual lithium-nickel composite compound will be excessively high, so there is a risk of causing gelation. Furthermore, if the temperature is above the upper limit value, the Li-Al hydroxide is likely to be dehydrated so as to form an oxide containing lithium and aluminum (also referred to below as the "Li-Al oxide"), and consequently there is a risk that the ion conductivity, etc. of the present invention will not be achieved. Additionally, elution of Li from within the secondary particles due to the heat treatment causes a deterioration in quality, it is difficult to control the amount of residual lithium, and there is also the risk of causing gelation.

It should be noted that there is no particular limitation as to the method of heat treatment, and a treatment using a roller hearth kiln or a rotary kiln, or a vacuum drying treatment, etc. may be adopted as appropriate. Additionally, the atmosphere during the heat treatment needs to take account of the nickel content in the lithium-nickel composite compound which is being dried, and the heat treatment is preferably carried out under an oxygen atmosphere, a vacuum atmosphere, or under decarboxylated air having a carbon dioxide concentration of no greater than 100 ppm.

In the heat treatment step (A4), [Reaction γ] below proceeds, following abovementioned [Reaction β].

[Reaction γ] LiAl₂(OH)₇•2H₂O → LiAl₂(OH)₇-LiAl₂O₃(OH)+nH₂O↑

It is possible to cause the Li-Al hydroxide coating layer to be formed on the surface layer of the secondary particles of the lithium-nickel composite compound by passing in succession through the steps (A1)-(A4) as described above. In the treatment method A of the present invention, the surface layer of the secondary particles on which the Li-Al hydroxide coating layer is formed constitutes (a) and (b) below:
(a) surfaces of secondary particles of the lithium-nickel composite compound; and
(b) at least part of grain boundary portions (interfaces of primary particles) formed by adjacent primary particles located on the outermost surface, among a plurality of primary particles constituting the secondary particles.

Furthermore, when the X compound has been added to the cake-like compound after the filtration step (A3), the Li-X compound coating layer may be formed on at least one of (a) and (b) above. It should be noted that whether the Li-X compound coating layer is formed on either of (a) and (b) or on both of (a) and (b) varies according to the type of X compound which is added to the cake-like compound.

### [Treatment Method B]

The treatment method B for treating positive electrode active material particles according to the present invention constitutes a method for treating positive electrode active material particles comprising a lithium-nickel composite compound having a layered rock-salt structure, which contains Li, Ni and O, and may also contain other elements in addition to Li, Ni and O. The treatment method B then includes at least the following steps (B1)-(B4) in succession:
(B1) a preparation step in which an aluminum compound is introduced into water and stirred to prepare an aluminum aqueous solution;
(B2) a slurry formation step in which the lithium-nickel composite compound is introduced into the aluminum aqueous solution obtained in the preparation step and stirred to prepare a slurry;
(B3) a filtration step in which the slurry obtained in the slurry formation step is filtered to obtain a cake-like compound; and
(B4) a heat treatment step in which the cake-like compound obtained in the filtration step is dried by performing a heat treatment.

In the treatment method B comprising, in succession, at least the steps (B1)-(B4), the aluminum aqueous solution is first of all prepared in the step (B1), after which the lithium-nickel composite compound is introduced into the aluminum aqueous solution in the subsequent step (B2) in order to prepare a slurry. That is to say, the treatment method B according to the present invention essentially constitutes a treatment method in which the slurry formation step (A1) and the dripping step (A2) of treatment method A of the present invention, which has already been described, are performed in reverse order, after which the step (B3) which is the same as the filtration step (A3) in treatment method A, and the step (B4) which is the same as the heat treatment step (A4) in treatment method A are performed in succession.

In this treatment method B, the slurry is formed when the lithium-nickel composite compound is introduced into the aluminum aqueous solution, and the Al fraction and the Li fraction in the slurry immediately react to form an extremely fine gel, that is, a reaction is produced that forms an Li-Al hydroxide that is so fine and dense that it is difficult to identify the primary particle size, after which the Li-Al hydroxide can be evenly, and not locally, deposited on the surface layer of secondary particles of the lithium-nickel composite compound, with stirring. Additionally, the extremely fine gel comprising the Li-Al hydroxide can also be deposited in gaps between the primary particles constituting the surface layer portion of the secondary particles, i.e., at the grain boundary portions, in the same way as in treatment method A.

Similarly to treatment method A, it is also thought that, by means of treatment method B, the effect of a binder between the primary particles at the surface layer portion of the secondary particles is produced by this coating of the very fine and dense Li-Al hydroxide, and, additionally, a reduction in resistance over the entire surface layer of the secondary particles and in individual secondary particles is achieved because of high ion conductivity, which is a feature of the Li-Al hydroxide, and the ability to trap residual Li and protons near the surface layer of the secondary particles, and a considerable effect of suppressing particle cracking can be achieved.

Furthermore, it is possible for only excess Li to be eluted while Li desorption from within the particles of the lithium-nickel composite compound is suppressed when the slurry is formed by introducing the lithium-nickel composite compound into the aluminum aqueous solution, and moreover, a ratio of the amount of the lithium-nickel composite compound and the amount of water within the slurry is controlled so that the amount of Li eluted is controlled, and therefore it is possible to coat the surface layer of the secondary particles more evenly with the Li-Al hydroxide while Al loss is reduced by preparing beforehand the aluminum aqueous solution correspondingly with the amount of Li required for the coating, and it is thought that, as a result, the amount of residual lithium in the positive electrode active material which is the final target product can be reduced, while the coating layer also has a sufficient thickness and a high coating rate, and the effect of reducing resistance of the secondary particles is increased.

The steps will be described below in order.

### (B1) Preparation step

In the preparation step (B1), an aluminum compound is introduced into water and stirred to prepare an aluminum aqueous solution. The aluminum aqueous solution is prepared, for example, by introducing a predetermined amount of water, such as pure water, into a reaction tank, and introducing an aluminum compound into this water, followed by stirring.

The aluminum compound should be a compound that forms an aluminum aqueous solution and is not particularly limited. However, as will be described later, the reaction system obtained by introducing the lithium-nickel composite compound into the aluminum aqueous solution, i.e. the slurry, is preferably alkaline to ensure that Li does not elute from the secondary particles of the lithium-nickel composite compound, but if the Li-Al hydroxide is to be formed by precipitating Al, which is an amphoteric element, in the form of a gel in an alkaline slurry, then there is a risk that Al which cannot precipitate will remain in the slurry and will ultimately be discarded without having been able to precipitate, so in order to reduce the amount of Al which is discarded, the aluminum aqueous solution itself is preferably an acidic solution, and examples of aluminum compounds for preparing such an acidic solution that may be cited include aluminum sulfate, aluminum nitrate, and aluminum acetate, etc.

As indicated above, the aluminum aqueous solution is preferably an acidic solution, the pH thereof preferably being 1-6, and more preferably being 1.5-5.5. If the pH of the aluminum aqueous solution is below the lower limit value, the acidity is excessively high and there is a risk of excessive Li elution from the lithium-nickel composite compound in the subsequent slurry formation step (B2). In addition, when the acidity increases, there is a risk of the lithium-nickel composite compound itself dissolving in the acid. Furthermore, if the pH of the aluminum aqueous solution is above the upper limit value, there is a risk of not adequately achieving the effect of reducing the amount of Al discarded. Furthermore, if the solution concentration is excessively lean, even assuming a predetermined amount of Al, there is a risk of a drop in the solid-liquid ratio, which will be described later in the slurry formation step (B2), causing excessive Li elution from the lithium-nickel composite compound in the slurry formation step (B2).

It should be noted that the aluminum concentration in the aluminum aqueous solution is preferably around 0.1 mol/L-2.5 mol/L in the subsequent slurry formation step (B2), as will be described later, from the point of view of enabling more even coating of the Li-Al hydroxide in the surface layer region of the secondary particles.

In the preparation step (B1), the amount of water is preferably adjusted beforehand to take account of the ratio of the amount of lithium-nickel composite compound to be introduced in the subsequent slurry formation step (B2) to the amount of water when the aluminum compound is introduced into the water (this ratio is also referred to below as the "solid-liquid ratio" in treatment method B, in the same way as in treatment method A). For example, the amount of water into which the aluminum compound is introduced is adjusted so that the ratio (solid-liquid ratio) of the amount of lithium-nickel composite compound to the amount of water is preferably 750 g/L-2000 g/L, and more preferably 800 g/L-1800 g/L. If the solid-liquid ratio is below the lower limit value, then there is an excessively large amount of water and Li also elutes from within the secondary particles of the lithium-nickel composite compound, which risks leading to a reduction in quality of the positive electrode active material which is the final target product.

Furthermore, if the solid-liquid ratio is above the upper limit value, there is an excessively small amount of water and a greater amount of residual lithium than required in the surface layer of the secondary particles, which risks making it difficult to suitably control the amount of residual lithium in the positive electrode active material which is the final target product.

### (B2) Slurry formation step

In the slurry formation step (B2), the lithium-nickel composite compound is introduced into the aluminum aqueous solution obtained in the preparation step (B1) and stirred to prepare a slurry of the lithium-nickel composite compound. In the treatment method B according to the present invention, the slurry formation step (B2) is an especially important step for adequately achieving the effect of reducing resistance of the secondary particles as described above.

The lithium-nickel composite compound used in the treatment method B may be the same as the lithium-nickel composite compound used in the treatment method A, for example.

Here, the amount of Li eluted from the secondary particles of the lithium-nickel composite compound, and the amount of residual lithium in the positive electrode active material which is the final target product can be more suitably controlled by adjusting the ratio (solid-liquid ratio) of the amount of lithium-nickel composite compound introduced to the amount of water in the aluminum aqueous solution to a suitable range so that the Al in the aluminum aqueous solution reacts with the Li to form the Li-Al hydroxide. Accordingly, as described in the preparation step (B1), the amount of water is preferably adjusted beforehand when the aluminum compound is introduced into the water.

In the slurry formation step (B2), the total amount of the lithium-nickel composite compound may be introduced at one time into the aluminum aqueous solution, or the total amount of the lithium-nickel composite compound may be gradually introduced into the aluminum aqueous solution within a predetermined time. When the lithium-nickel composite compound is gradually introduced within a predetermined time, this predetermined time may be the stirring time for preparation of the slurry which will be described later, for example.

The lithium-nickel composite compound is introduced into the aluminum aqueous solution and stirred to thereby prepare the slurry, and, by adjusting the stirring time, it is possible to cause sufficient Li to elute into the slurry in the required amount from the secondary particles of the lithium-nickel composite compound, which can afford greater stability.

That is to say, in the slurry formation step (B2), the slurry is preferably prepared by stirring, with the stirring time being adjusted to 3 minutes-30 minutes, and more preferably to 5 minutes-25 minutes. If the stirring time is below the lower limit value, the amount of Li expected to elute from the secondary particles of the lithium-nickel composite compound will become smaller, which risks increasing the amount of residual lithium. Furthermore, if the stirring time is above the upper limit value, there is no further improvement in the advantage associated with slurry preparation, and there is a risk of reduced producibility.

It should be noted that there is no particular limitation as to the temperature of the aluminum aqueous solution into which the lithium-nickel composite compound is introduced, but the temperature is preferably adjusted to around 15°C-35°C, for example, in order to prepare a suitable slurry, as mentioned above.

As indicated above, when the lithium-nickel composite compound is introduced into the aluminum aqueous solution, the Al immediately precipitates in the form of a gel to form the Li-Al hydroxide, so the surface layer region of the secondary particles can be more evenly coated with the Li-Al hydroxide by suitably adjusting the aluminum concentration of the aluminum aqueous solution, as described above, and by also suitably adjusting the amount of aluminum in the aluminum aqueous solution into which the lithium-nickel composite compound is introduced.

That is to say, in the slurry formation step (B2), the amount of aluminum in the aluminum aqueous solution into which the lithium-nickel composite compound is introduced is preferably 0.01 mol%-1.5 mol%, and more preferably 0.05 mol%-1.0 mol%. If the amount of aluminum is below the lower limit value, then the gel-form Li-Al hydroxide particles are excessively small, and there is a risk of increasing the amount of Li-Al hydroxide that cannot be coated on the secondary particles of the lithium-nickel composite compound. Furthermore, if the amount of aluminum is above the upper limit value, then the gel-form Li-Al hydroxide particles are excessively large and may not be refined even with stirring, which produces a risk of localized coating of the surface layer of the secondary particles.

As mentioned above, in the slurry formation step (B2), the reaction system obtained by introducing the lithium-nickel composite compound into the aluminum aqueous solution, i.e. the slurry, is preferably alkaline to ensure that Li does not elute from the secondary particles of the lithium-nickel composite compound, and the pH thereof is preferably 9-14, more preferably 10-13. If the pH of the slurry is below the lower limit value, there is a risk of Li elution from the secondary particles of the lithium-nickel composite compound. Furthermore, if the pH of the slurry is above the upper limit value, there is a risk that the added Al compound will re-dissolve and the majority thereof will flow out in the filtrate.

As a result of investigations carried out in the present invention, it also became clear that the amount of Li that elutes into the slurry when the lithium-nickel composite compound is introduced into the aluminum aqueous solution in which the aluminum concentration and the amount of aluminum have been adjusted as described above in the slurry formation step (B2), for example, is related to the electrical conductivity of the slurry. By controlling the electrical conductivity of the slurry, the ratio (Li/AI) of Li and Al which react to form the Li-Al hydroxide, and the amount of residual lithium in the positive electrode active material which is the final target product can be determined from the solid-liquid ratio in the preparation step (B1) and the stirring time in the slurry formation step (B2).

That is to say, the electrical conductivity of the reaction system obtained by introducing the lithium-nickel composite compound into the aluminum aqueous solution, i.e. the slurry, is preferably 10 mS/cm-100 mS/cm, and more preferably 20 mS/cm-80 mS/cm. If the electrical conductivity is below the lower limit value, then a smaller amount of Li elutes into the slurry, and there is a risk that the expected amount of Li-Al hydroxide will not be formed. Furthermore, if the electrical conductivity is above the upper limit value, an excessively large amount of Li elutes into the slurry, and there is a risk of a reduction in quality of the secondary particles of the lithium-nickel composite compound.

Moreover, the ratio of Li and Al which react to form the Li-Al hydroxide as described above (the ratio of Li and Al in the slurry obtained by introducing the lithium-nickel composite compound into the aluminum aqueous solution; Li/AI, molar ratio) is preferably 0.5-50, and more preferably 2-30, for example. It should be noted that Li/AI is a value obtained by using the Li amount and Al amount quantitatively determined in accordance with the measurement method in "<Composition of precursor composite compound and positive electrode active material>" which will be described later, in the same way as in treatment method A.

In the slurry formation step (B2), if the aluminum aqueous solution is assumed to be an aluminum sulfate (Al₂(SO₄)₃) aqueous solution, for example, and the lithium-nickel composite compound is represented by the formula: LiₓNiO₂, for example, then the following [Reaction ε] proceeds.

[Reaction ε] z(Al₂(SO₄)₃)aq+LiₓNiO₂→z(Al₂(SO₄)₃)aq+Li_{x-y}NiO₂+yLiOHaq→zLiAl₂(OH)₇•2H₂O+(y-z)LiOHaq(+Li_{x-y}NiO₂)

### (B3) Filtration step

In the filtration step (B3), after completion of the slurry formation step (B2), the resulting slurry is filtered using a filtration device, etc., such as a Büchner funnel or a filter press, for example, to obtain a cake-like compound. It should be noted that the filtration step (B3) in treatment method B is essentially the same as the filtration step (A3) in treatment method A.

The moisture content of the cake-like compound does not affect formation of the final Li-Al hydroxide coating layer and is not particularly limited, but when the X compound is added to the cake-like compound, in the same way as in treatment method A, for example, the moisture content is preferably around 3 wt%-10 wt% from the point of view of facilitating mixing of the cake-like compound and the X compound.

In the treatment method B of the present invention also, the X compound is preferably added to the cake-like compound after the filtration step (B3), in the same way as in the treatment method A. By adding this X compound, a portion thereof forms an Li-X compound by reaction of Li and the element X, and a portion thereof can coat the surface layer of the secondary particles and the interior of the secondary particles of the lithium-nickel composite compound in the form of the X compound or an X oxide. The coating layer of the Li-X compound and X compound which is formed further enhances the effect of reducing resistance of the secondary particles, in conjunction with the Li-Al hydroxide coating layer, cracking of particles can be further suppressed, and thus a deterioration in battery characteristics can further be suppressed.

The X compound and the element X that forms the X compound may each be the same as the X compound and the element X used in the treatment method A, for example.

It should be noted for the form of the X compound added to the cake-like compound that forms such as a powder, solution and colloid may be suitably adopted, depending on the type of X compound, in the same way as in the treatment method A. Furthermore, the amount of the element X which is added may also be suitably adjusted depending on the type of element X, in the same way as in the treatment method A.

If the X compound is added to the cake-like compound after the filtration step (B3), when the X compound is assumed to be tungsten oxide (WO₃), for example, then [Reaction η] below proceeds based on the lithium hydroxide (LiOH) aqueous solution obtained in abovementioned [Reaction ε]. However, this does not apply to the compound formed by the temperature of the final heat treatment.

[Reaction η] (y-z)LiOHaq+(moisture in cake-like compound)+tWO₃→tLi₂WO₄

It should be noted that the X compound is preferably added to the cake-like compound after the filtration step (B3), as mentioned above, but the time at which the X compound is added, when it is used, is not limited to after the filtration step (B3), and the time may be freely determined in the treatment method B according to the present invention.

For example, the X compound in the form of a solution or a colloid, etc. may also be dripped when the slurry is prepared while stirring the aluminum aqueous solution and the lithium-nickel composite compound in the slurry formation step (B2), in addition to the X compound being added after the filtration step (B3) as described above. Furthermore, there is no particular limitation as to the amount of the element X which is added, provided that a coating layer of the intended Li-X compound is formed, and the amount thereof may be suitably adjusted depending on the type of element X, in the same way as when the X compound is added after the filtration step (B3), for example.

For example, even if the X compound in the form of a solution or a colloid, etc. is dripped in the slurry formation step (B2), a portion thereof forms the Li-X compound and a portion thereof can coat the surface layer of the secondary particles and the interior of the secondary particles of the lithium-nickel composite compound in the form of the X compound or an X oxide, and the coating layer of the Li-X compound and X compound which is formed further enhances the effect of reducing resistance of the secondary particles, in conjunction with the Li-Al hydroxide coating layer, cracking of particles can be further suppressed, and thus a deterioration in battery characteristics can further be suppressed.

### (B4) Heat treatment step

In the heat treatment step (B4), the cake-like compound obtained in the filtration step (B3) is dried by performing a heat treatment. It should be noted that the heat treatment step (B4) in treatment method B is essentially the same as the heat treatment step (A4) in treatment method A.

The heat treatment is preferably performed to an extent that the Li-Al hydroxide coating layer which is formed may be present as a single phase, i.e., until the Li-Al hydroxide is, as far as possible, no longer in the state of a hydrate, and is also preferably performed to an extent that the Li-Al hydroxide is not dehydrated to become an oxide.

When the heat treatment is performed as described above, the temperature is preferably set at 120°C-350°C, and more preferably at 140°C-320°C, with reference to Non-Patent Document 1, for example, in the same way as in treatment method A. The reasons for which the temperature of the heat treatment is set in such a range is the same as for the treatment method A.

It should be noted that there is no particular limitation as to the method of heat treatment, and the same methods as in treatment method A above may be adopted as appropriate, for example. Additionally, in the same way as in treatment method A, the atmosphere during the heat treatment also needs to take account of the nickel content in the lithium-nickel composite compound which is being dried, and an atmosphere which is the same as in treatment method A is preferred, for example.

In the heat treatment step (B4), [Reaction ζ] below proceeds, following abovementioned [Reaction ε].

[Reaction ζ] LiAl₂(OH)₇•2H₂O → LiAl₂(OH)₇-LiAl₂O₃(OH)+nH₂O↑

It is possible to cause the Li-Al hydroxide coating layer to be formed on the surface layer of the secondary particles of the lithium-nickel composite compound by passing in succession through the steps (B1)-(B4) as described above. In the treatment method B of the present invention also, the surface layer of the secondary particles on which the Li-Al hydroxide coating layer is formed constitutes (a) and (b) below, in the same way as in treatment method A:
(a) surfaces of secondary particles of the lithium-nickel composite compound; and
(b) at least part of grain boundary portions (interfaces of primary particles) formed by adjacent primary particles located on the outermost surface, among a plurality of primary particles constituting the secondary particles.

Furthermore, when the X compound has been added to the cake-like compound after the filtration step (B3), the Li-X compound coating layer may be formed on at least one of (a) and (b) above. It should be noted that whether the Li-X compound coating layer is formed on either of (a) and (b) or on both of (a) and (b) varies according to the type of X compound which is added to the cake-like compound.

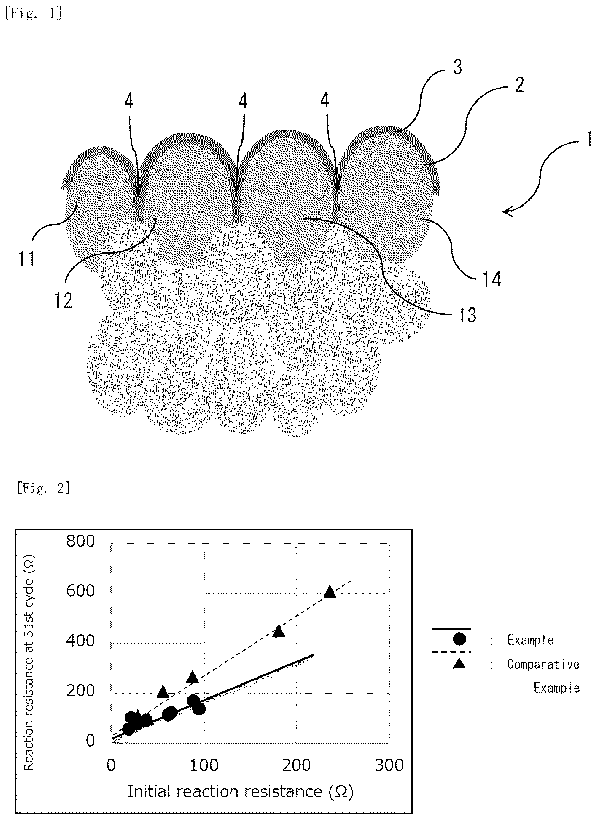

Fig. 1 is a schematic view in cross section of the surface layer of secondary particles of the lithium-nickel composite compound, in which the Li-Al hydroxide coating layer is formed by means of the treatment method of the present invention.

As shown in fig. 1, not only is an Li-Al hydroxide coating layer 3 formed on a surface 2 of a secondary particle 1 made up of multiple primary particles 11, 12, 13, 14..., the Li-Al hydroxide coating layer 3 is also formed on part of grain boundary portions 4 formed by adjacent primary particles 11, 12; 12, 13; 13, 14... located on the outermost surface.

By virtue of the treatment method of the present invention, i.e., both the treatment method A and the treatment method B of the present invention, an even coating layer of the very fine and dense Li-Al hydroxide, rather than an Li-Al oxide coating layer, can be formed on (a) surfaces of the secondary particles, and also on (b) at least part of the grain boundary portions (interfaces of the primary particles) formed by adjacent primary particles located on the outermost surface, and therefore the effect of a binder between the primary particles on the surface layer of the secondary particles is produced, and, additionally, ion conductivity afforded by the Li-Al hydroxide can be imparted to each secondary particle, so lower resistance is achieved. In addition, by virtue of the treatment method of the present invention, i.e., the treatment method A and the treatment method B of the present invention, it is possible to reduce the excess lithium fraction which remains from the center portion toward the surface layer of the secondary particles, and elution of Li caused by repeated charging and discharging can also be suppressed, so a considerable effect of suppressing cracking of particles can be achieved.

### <Positive electrode active material>

The positive electrode active material according to the present invention is formed by a lithium-nickel composite compound having a layered rock-salt structure, which contains Li, Ni and O, and may also contain other elements in addition to Li, Ni and O. As indicated above, the Li-Al hydroxide coating layer is formed on the surface layer of the secondary particles of the lithium-nickel composite compound, i.e., on (a) and (b) below.
(a) surfaces of secondary particles of the lithium-nickel composite compound; and
(b) at least part of grain boundary portions (interfaces of primary particles) formed by adjacent primary particles located on the outermost surface, among a plurality of primary particles constituting the secondary particles.

In addition, the positive electrode active material according to the present invention may also comprise an Li-X compound coating layer or an X compound coating layer on at least one of (a) surfaces of the secondary particles, and (b) at least part of the grain boundary portions.

"Part of the grain boundary portions" means, literally, not the entire surface of the grain boundary portions, rather a portion thereof. The length of the entire surface of the grain boundary portions varies according to the size of the primary particles constituting the secondary particles, and is not particularly limited, but this length is around 80 nm-800 nm, considering a minor axis portion in the shape of the primary particles constituting the secondary particles, for example. Furthermore, parts corresponding to abovementioned (b) mainly mean the outermost surface layer portions of the primary particles constituting the secondary particles, and the grain boundary portions denote junctions of adjacent primary particles.

In the present specification, the mean particle sizes are values obtained by using a scanning electron microscope SEM-EDS (field emission scanning electron microscope JS-7100F: produced by JEOL Ltd.) with an acceleration voltage of 10 kV, and are based on electron microscope photographs (SEM photographs) of the primary particles or the secondary particles of the lithium-nickel composite compound imaged so that grain boundaries of the primary particles can be confirmed.

The Li-Al hydroxide preferably comprises LiAl₂(OH)₇, for example, from the point of view of not readily producing island-shaped parts in the coating layer, an excellent binding effect especially on (b) at least part of the grain boundary portions, and a considerable effect of suppressing cracking of particles, and also an effect of imparting ion conductivity. In the case of an Li-Al oxide, particles of an Li-Al compound grow in the coating layer, and island-shaped parts are formed. Additionally, ion conductivity such as in the present invention cannot be imparted.

The thickness of the Li-Al hydroxide coating layer is 1 nm or greater, or 3 nm or greater, which thereby makes it possible to achieve the outstanding effect of suppressing cracking of particles as referred to in the present invention. Furthermore, there is no particular limitation as to the upper limit value of the thickness, but a value of around 200 nm or less is preferred to take account of the difficulty of achieving a more even coating of the Li-Al hydroxide.

Furthermore, when the Li-X compound coating layer is formed, it is possible to achieve an even better effect of suppressing cracking of particles, and since the type and amount thereof are related to the Li-Al hydroxide coating layer, it is possible to achieve a synergistic effect thereof.

In the present specification, the coating condition and coating layer thickness afforded by the coating layer may be investigated by using Auger electron spectroscopy (also referred to below as "AES"), scanning electron microscopy with energy dispersive X-ray spectroscopy (also referred to below as "SEM-EDX"), or transmission electron microscopy with energy dispersive X-ray spectroscopy (also referred to below as "TEM-EDX"), etc., for example.

When abovementioned AES is adopted, for example, use is made of an Auger electron spectrometer (PHI 710: produced by ULVAC-PHI, Inc.), a sample is fixed to an indium foil and introduced into the device, a field of view where there are no particle overlaps is located by SEM observation, and AES mapping is performed, with point analysis being carried out for the presence of Al. Furthermore, depth analysis comprising repeated Ar sputtering and AES analysis is carried out in order to obtain information relating to the coating condition at the analysis locations determined by the point analysis. The AES measurement conditions are shown below.

### (Measurement conditions)

Electron beam acceleration voltage: 10 kV
Number of data points: 256 × 256 points
Detection depth: approximately 3 nm
Measurement magnification: 5000 times
Sputtering rate: 13.1 nm/min (SiOz equivalent value)

The coefficient of variation of the amount of Al present in the Li-Al hydroxide coating layer is preferably less than 30%, more preferably less than 20%, even more preferably less than 18%, and particularly preferably less than 16%. When the coefficient of variation is less than the upper limit value, this makes it possible to form a more even coating layer on the surface layer of the secondary particles, and an even better effect of suppressing cracking of particles can be achieved.

In the present specification, the coefficient of variation of the amount of Al present in the coating layer may be determined by using abovementioned AES, SEM-EDX, or TEM-EDX, etc., for example.

For example, when the abovementioned AES is used, the coefficient of variation may be determined by means of point analysis of the AES from the results at five randomly selected locations (N = 5) in the coating layer using the standard deviation and mean value of numerical values obtained after confirming the presence of Al, on the basis of the following formula. Coefficient of variation (%) = (standard deviation/mean value) ×100 (%)

The proportion of (a) surfaces of the secondary particles and (b) at least part of the grain boundary portions over which the coating layer is present (coating layer coverage), without being present in the form of islands, is preferably 30% or more.

In the present specification, the coating layer coverage may be obtained by image analysis based on abovementioned AES, for example.

The positive electrode active material according to the present invention may be formed by a lithium-nickel composite compound having a layered rock-salt structure, which contains Li, Ni and O, and may also contain other elements in addition to Li, Ni and O, and there is no particular limitation as to the composition thereof, but it preferably has a composition represented by the following formula (I):

LiₐNi_{1-b-c}Co_{b}M_{c}O₂ (I)

(in the formula, M is an element other than Li, Ni, Co or O, 0.95≤a≤1.15, 0≤b≤0.08, and 0≤c≤0.12).

In formula (I) above, there is no particular limitation as to M, which is an element other than Li, Ni, Co and O, and examples thereof include: aluminum (Al), manganese (Mn), titanium (Ti), magnesium (Mg), zinc (Zn), niobium (Nb), tungsten (W), molybdenum (Mo), vanadium (V), chromium (Cr), calcium (Ca), Iron (Fe), gallium (Ga), strontium (Sr), yttrium (Y), antimony (Sb), ruthenium (Ru), indium (In), tin (Sn), tantalum (Ta), bismuth (Bi), zirconium (Zr), and boron (B), etc. Among these, M preferably includes at least one of Al and Mn, in particular.

In the lithium-nickel composite compound having a composition represented by formula (I) above, an amount a of Li, in other words, a ratio of the amount of Li and the total amount of Ni, Co and element M (Li/(Ni+Co+M)) is preferably 0.95≤a≤1.15, and more preferably 0.98≤a≤1.12.

In the lithium-nickel composite compound having a composition represented by formula (I) above, an amount b of Co, in other words, a ratio of the amount of Co and the total amount of Ni, Co and element M (Co/(Ni+Co+M)) is preferably 0≤b≤0.08, and more preferably 0≤b≤0.06.

In the lithium-nickel composite compound having a composition represented by formula (I) above, an amount c of element M, in other words, a ratio of the amount of element M and the total amount of Ni, Co and element M (M/(Ni+Co+M)) is preferably 0≤c≤0.12, and more preferably 0≤c≤0.11.

Based on the amount of Co and the amount of element M, an amount (1-b-c) of Ni in the lithium-nickel composite compound having a composition represented by formula (I) above, in other words, a ratio of the amount of Ni and the total amount of Ni, Co and element M (Ni/(Ni+Co+M)) is preferably 0.80≤(1-b-c)≤1, and more preferably 0.83≤(1-b-c)≤1.

The amount of aluminum in the Li-Al hydroxide constituting the coating layer formed on the surface layer of the lithium-nickel composite compound of the positive electrode active material according to the present invention is preferably 0.01 mol%-1.5 mol% of the total weight of positive electrode active material, more preferably 0.05 mol%-1.2 mol%, and particularly preferably 0.1 mol%-1.0 mol%. If the amount of aluminum is below the lower limit value, there is a risk of difficulty in achieving a sufficient effect of suppressing cracking of particles. Furthermore, if the amount of aluminum is above the upper limit value, the thickness of the coating layer is excessively large, which risks causing an increase in resistance.

Furthermore, the amount of residual lithium in the positive electrode active material according to the present invention, as determined by neutralization titration, is preferably 0.15 wt% or less, and more preferably 0.14 wt% or less. If the amount of residual lithium is above the upper limit value, there is a risk of causing gelation and gas generation. It should be noted that the amount of residual lithium is an amount of Li derived from LiOH and Li₂CO₃, for example, which are not contained in the lithium-nickel composite compound or the coating layer (Li-Al hydroxide and Li-X compound).

In the present specification, the amount of residual lithium was calculated in accordance with the Warder method. Specifically, 20 g of a powder of particles of the lithium-nickel composite compound serving as positive electrode active material particles were added to 100 mL of water and stirred for 20 minutes at room temperature, after which solids were filter separated and removed to obtain a supernatant for which the amount of residual lithium was determined by titration using 0.2 N hydrochloric acid. Two points where the gradient was greatest on a pH curve drawn by plotting titration amount (mL) on the horizontal axis and supernatant pH on the vertical axis were taken as a first titration point and a second titration point, starting from the point where the titration amount was smaller, and the amount of residual lithium is the value obtained from the titration amounts at these points by calculation using a calculation formula.

### <Method for producing positive electrode active material>

There is no particular limitation as to the method for producing the positive electrode active material according to the present invention, provided that the positive electrode active material particles are treated according to what is described above in the "<Method for treating positive electrode active material particles>" section, and the lithium-nickel composite compound constituting the positive electrode active material particles may be produced by a normal method.

That is to say, it is possible to adopt a method in which a precursor composite compound containing at least Ni is synthesized, and the precursor composite compound and a lithium compound are mixed to prepare a mixture, after which the mixture is fired, for example, or another method may be adopted.

There is no particular limitation as to the method for synthesizing the precursor composite compound, and, for example, an aqueous solution comprising a nickel compound aqueous solution and various types of aqueous solutions of compounds comprising an element other than Ni, according to the composition of the intended positive electrode active material, are dripped into a reaction tank with stirring, using an alkaline aqueous solution such as a sodium hydroxide aqueous solution or an ammonia solution, for example, as a mother liquor, the pH is monitored and controlled to a suitable range while sodium hydroxide, etc. is also dripped, and the precursor composite compound is obtained by coprecipitation by means of a wet reaction. Examples of the precursor composite compound which may be cited include hydroxides, oxides obtained by calcining said hydroxides, and carbonates, etc.

It should be noted that, once the alkaline aqueous solution serving as the mother liquor has been prepared for the reaction relating to the synthesis, an inert gas, or nitrogen gas which is industrially preferred, is preferably used to set a nitrogen atmosphere inside the reaction tank so that the oxygen concentration inside the reaction tank system and in the solutions is as low as possible. If the oxygen concentration is excessively high, there is a risk that the coprecipitated hydroxide will be excessively oxidized by the oxygen which remains above a predetermined amount, and a risk that formation of agglomerates by crystallization will be hindered.

There is no particular limitation as to the nickel compound, but examples which may be cited include: nickel sulfate, nickel oxide, nickel hydroxide, nickel nitrate, nickel carbonate, nickel chloride, nickel iodide, and metallic nickel, etc.

There is no particular limitation as to the element other than Ni constituting the positive electrode active material, but examples thereof include Co, and also Al, Mn, Ti, Mg, Zn, Nb, W, Mo, Sb, V, Cr, Ca, Fe, Ga, Sr, Y, Ru, In, Sn, Ta, Bi, Zr and B, etc., which were given as examples of the element M other than Li, Ni, Co and O, in formula (I) above.

There is no particular limitation as to the compound comprising an element other than Ni, but examples thereof include a cobalt compound, aluminum compound, manganese compound, titanium compound, magnesium compound, zinc compound, niobium compound, and tungsten compound, etc.

There is no particular limitation as to the cobalt compound, but examples which may be cited include: cobalt sulfate, cobalt oxide, cobalt hydroxide, cobalt nitrate, cobalt carbonate, cobalt chloride, cobalt iodide, and metallic cobalt, etc.

There is no particular limitation as to the aluminum compound, but examples which may be cited include: aluminum sulfate, aluminum oxide, aluminum hydroxide, aluminum nitrate, aluminum carbonate, aluminum chloride, aluminum iodide, sodium aluminate, and metallic aluminum, etc.

There is no particular limitation as to the manganese compound, but examples which may be cited include: manganese sulfate, manganese oxide, manganese hydroxide, manganese nitrate, manganese carbonate, manganese chloride, manganese iodide, and metallic manganese, etc.

There is no particular limitation as to the titanium compound, but examples which may be cited include: titanyl sulfate, titanium oxide, titanium hydroxide, titanium nitrate, titanium carbonate, titanium chloride, titanium iodide, and metallic titanium, etc.

There is no particular limitation as to the magnesium compound, but examples which may be cited include: magnesium sulfate, magnesium oxide, magnesium hydroxide, magnesium nitrate, magnesium carbonate, magnesium chloride, magnesium iodide, and metallic magnesium, etc.

There is no particular limitation as to the zinc compound, but examples which may be cited include: zinc sulfate, zinc oxide, zinc hydroxide, zinc nitrate, zinc carbonate, zinc chloride, zinc iodide, and metallic zinc, etc.

There is no particular limitation as to the niobium compound, but examples which may be cited include: niobium oxide, niobium chloride, lithium niobate, and niobium iodide, etc.

There is no particular limitation as to the tungsten compound, and examples which may be cited include: tungsten oxide, sodium tungstate, ammonium paratungstate, tungsten hexacarbonyl, and tungsten sulfide, etc.

The proportions in which the nickel compound and the various types of compounds comprising an element other than Ni are blended should be appropriately adjusted while taking account of the composition of the intended positive electrode active material so that the amount of Ni and the amount of the various elements other than Ni reach the desired proportions.

When the intended positive electrode active material is formed by a lithium-nickel composite compound having a composition represented by the following formula (I), for example:

LiₐNi_{1-b-c}Co_{b}M_{c}O₂ (I)

(in the formula, M is an element other than Li, Ni, Co or O, 0.95≤a≤1.15, 0≤b≤0.08, and 0≤c≤0.12),
then the amount (1-b-c) of Ni, the amount (b) of Co, and the amount (c) of element M are preferably each as described above in "<Positive electrode active material>".

The appropriate range to which the pH is controlled when the precursor composite compound is synthesized may be determined so as to achieve a desired secondary particle size and coarseness/fineness, and the pH is generally in the range of around 10 to around 13.

The precursor composite compound obtained by means of a wet reaction as described above is preferably subjected to a washing treatment and then a drying treatment after dewatering.

By performing the washing treatment, it is possible to rinse off impurities taken into agglomerated particles during the reaction, such as sulfate radicals and carbonate radicals adhering to a surface layer, and a sodium fraction. Washing treatments which may be used include a process of Nutsche washing employing a Büchner funnel, provided that there is only a small amount of impurity, and a process of feeding a suspension after the reaction to a press filter, washing with water and dewatering. It should be noted that the washing treatment may employ pure water, a sodium hydroxide aqueous solution, or a sodium carbonate aqueous solution, etc., but pure water is preferably used from an industrial point of view. However, when there is a large quantity of residual sulfate radicals, it is also possible to perform the washing treatment using a sodium hydroxide aqueous solution which is pH-controlled according to the residual amount.

The precursor composite compound synthesized in this way and a lithium compound are then mixed in a predetermined ratio to prepare a mixture. The mixing may be solvent-based mixing in which the precursor composite compound and the lithium compound are each in the form of a solution, such as an aqueous solution, and the solutions are mixed in a predetermined ratio, or it may be non-solvent-based mixing in which a powder of the precursor composite compound and a powder of the lithium compound are weighed out in predetermined proportions and mixed by a dry method.

There is no particular limitation as to the lithium compound, and various types of lithium salts may be used. Examples of the lithium compound which may be cited include: lithium hydroxides such as anhydrous lithium hydroxide and lithium hydroxide monohydrate, lithium nitrate, lithium carbonate, lithium acetate, lithium bromide, lithium chloride, lithium citrate, lithium fluoride, lithium iodide, lithium lactate, lithium oxalate, lithium phosphate, lithium pyruvate, lithium sulfate, and lithium oxide, etc. Among these, lithium carbonate, anhydrous lithium hydroxide, and lithium hydroxide monohydrate are preferred.

The proportions in which the lithium compound and the precursor composite compound are blended should be appropriately adjusted while taking account of the composition of the intended positive electrode active material so that the total of the amount of Li, the amount of Ni, and the amounts of any of the various other elements reach the desired proportions.

When the intended positive electrode active material is formed by a lithium-nickel composite compound having a composition represented by the following formula (I), as described above, for example:

LiₐNi_{1-b-c}Co_{b}M_{c}O₂ (I)

(in the formula, M is an element other than Li, Ni, Co or O, 0.95≤a≤1.15, 0≤b≤0.08, and 0≤c≤0.12),
then the amount (a) of Li, is preferably as described above in "<Positive electrode active material>".

There is no particular limitation as to the firing temperature when the mixture of the precursor composite compound and the lithium compound is fired, but it is preferably around 700°C-950°C, and more preferably around 720°C-930°C, for example. If the firing temperature is below the lower limit value, there is a risk of difficulty in obtaining the desired crystals. Furthermore, if the firing temperature is above the upper limit value, crystal growth progresses excessively and there is a risk of reduced energy density.

The atmosphere during the firing is not particularly limited either, and it should be an atmosphere which enables adequate lithiation of the precursor composite compound and adequate crystal growth, and which furthermore has an oxygen partial pressure such that Ni contained in the mixture being fired does not reduce, and an oxidizing gas atmosphere or an oxygen atmosphere is preferably used, for example.

The firing time during the firing is not particularly limited either, and it should be a time which likewise enables adequate lithiation of the precursor composite compound and adequate crystal growth, and is preferably a time of 1 hour-15 hours, and more preferably 2 hours-10 hours, for example.

The positive electrode active material particles comprising a lithium-nickel composite compound obtained in this way are subjected to the treatment method A according to the present invention, which comprises at least the steps (A1)-(A4) in succession, as described above, or to the treatment method B according to the present invention, which comprises at least the steps (B1)-(B4) in succession, as described above, and as a result it is possible to obtain the positive electrode active material according to the present invention, in which the Li-Al hydroxide coating layer is formed on: (a) the surfaces of the secondary particles of the lithium-nickel composite compound, and (b) at least part of the grain boundary portions formed by adjacent primary particles located on the outermost surface, among the plurality of primary particles constituting the secondary particles.

### <Nonaqueous electrolyte secondary battery>

A nonaqueous electrolyte secondary battery according to the present invention comprises a positive electrode containing the positive electrode active material of the present invention produced in the manner described above, for example, and the nonaqueous electrolyte secondary battery comprises the abovementioned positive electrode, a negative electrode, and an electrolytic solution comprising an electrolyte.

When the positive electrode is produced, a conductive agent and a binder are admixed with the positive electrode active material of the present invention by means of a normal process. Acetylene black, carbon black, and graphite, etc. are preferred as conductive agents, for example. Polytetrafluoroethylene and polyvinylidene fluoride, etc. are preferred as binders, for example.

For the negative electrode, it is possible to use not only negative electrode active materials such as lithium metal, graphite, and low-crystallinity carbon materials, for example, but also at least one non-metal or metal element selected from the group consisting of Si, Al, Sn, Pb, Zn, Bi and Cd, or alloys comprising same, or chalcogen compounds comprising same.

Examples of solvents of the electrolytic solution that may be used include organic solvents comprising at least one type of carbonate such as ethylene carbonate, propylene carbonate, dimethyl carbonate and diethyl carbonate, or at least one type of ether such as dimethoxyethane.

Other than lithium hexafluorophosphate (LiPF₆), at least one type of lithium salt such as lithium perchlorate or lithium tetrafluoroborate, for example, may be dissolved in the solvent for use as the electrolyte.

### <Action>

By virtue of the method for treating positive electrode active material particles, i.e., both the treatment method A and the treatment method B of the present invention, it is possible to suppress any more cracking than necessary of secondary particles (cracking from the grain boundary portions) and also to control the amount of residual lithium in the positive electrode active material, and therefore a nonaqueous electrolyte secondary battery which employs such a positive electrode active material in the positive electrode thereof is capable of suppressing an increase in resistance, afforded by lowering the resistance, even with repeated use over a long period of time, and is also capable of suppressing a deterioration in battery characteristics such as cycle characteristics (cycle retention rate and amount of increase in reaction resistance).

In addition, by virtue of the treatment method A and the treatment method B for treating positive electrode active material particles, the coating layer of the Li-Al hydroxide, which is a moisture-containing substance, is evenly adhered to the positive electrode active material particles, which is therefore thought to enable improved thermal stability of the positive electrode active material.

### EXAMPLE

Representative examples of the present invention and comparative examples will be given below to describe the present invention in specific terms, but the present invention is not limited to these examples. It should be noted that physical properties and methods for obtaining characteristics, etc. are as given below.

### <XRD diffraction>

XRD diffraction data of the positive electrode active material was obtained under the following X-ray diffraction conditions using an X-ray diffraction apparatus [SmartLab, produced by Rigaku Corp.], after which a Rietveld analysis was performed using this XRD diffraction data, with reference to "R. A. Young, ed., "The Rietveld Method", Oxford University Press (1992)".

### (X-ray diffraction conditions)

Radiation source: Cu-Kα
Acceleration voltage and current: 45 kV and 200 mA
Sampling width: 0.02 deg.
Scanning width: 15 deg.-122 deg.
Scan speed: 1.0 steps/second
Divergence slit: 2/3 deg.
Receiving slit width: 0.15 mm
Scattering slit: 2/3 deg.

### <Composition of precursor composite compound and positive electrode active material>

Samples of 0.2 g of the precursor composite compound and the positive electrode active material were each heated and dissolved in 25 mL of a 20% hydrochloric acid solution, and the materials were cooled then transferred to a 100 mL measuring flask, and pure water was introduced to prepare an adjusted liquid. The elements in the adjusted liquid were quantitatively determined using ICP-AES (Optima 8300, produced by PerkinElmer, Inc.).

### <Coin cell employing positive electrode active material>

A 2032-type coin cell employing the positive electrode active material was produced by using a positive electrode, negative electrode and electrolytic solution produced by the following respective methods.

### (Positive electrode)

Using acetylene black and graphite as the conductive agent at a weight ratio of acetylene black:graphite=1:1, and using polyvinylidene fluoride as the binder, the positive electrode active material, conductive agent and binder were blended to achieve a weight ratio of positive electrode active material: conductive agent:binder=90:6:4, and a slurry obtained by mixing these materials with N-methylpyrrolidone was coated on an aluminum foil. The coated aluminum foil was dried at 110°C to prepare a sheet which was punched to a diameter of 15 mm and then rolled so that the density of a composite material was 3.0 g/cm³, and this was used as the positive electrode.

### (Negative electrode)

A lithium foil having a thickness of 500 µm punched to a diameter of 16 mm was used as the negative electrode.

### (Electrolytic solution)

A mixed solvent of ethylene carbonate (EC) and dimethyl carbonate (DMC) was prepared at a volume ratio of EC:DMC=1:2, and a solution obtained by mixing a 1M LiPF₆ electrolyte therewith was used as the electrolytic solution.

### <Nonaqueous electrolyte secondary battery characteristics>

### (1) Initial charging capacity and initial charging/discharging efficiency

Using the coin cell produced by the method above, after constant current charging at a current density of 20 mA/g to 4.30 V (upper limit voltage) under a 25°C environment, constant voltage charging was performed until the current density reached 2 mA/g. The capacity at this time was taken as the initial charging capacity (mAh/g).

After a pause of 5 minutes, constant current discharging was then performed at a current density of 20 mA/g to 3.00 V under the same environment, and the initial discharging capacity (mAh/g) was measured after a 5 minute pause. It should be noted that the series of steps up to measurement of the initial discharging capacity was taken as one charging/discharging cycle.

The initial charging/discharging efficiency was calculated on the basis of the following equation using the measured value of the initial charging capacity and the measured value of the initial discharging capacity. Initial charging/discharging efficiency (%) = (initial discharging capacity/initial charging capacity) × 100 (%)

### (2) Cycle retention rate

Using the coin cell produced by the method above, 104 cycles of charging/discharging were performed under a 60°C environment and the conditions indicated below. It should be noted that 1 C was taken as a current density of 200 mA/g. For the charging, constant current charging was performed up to the cut-off voltage, after which constant voltage charging was performed until the current density reached 2 mA/g.
1st, 2nd and 104th cycles:
   0.2 C charging (4.3 V cc-cv)
   5 minute pause
   0.2 C discharging(3.0 V cc)
   5 minute pause
3rd to 103rd cycles:
   0.5 C charging (4.3 V cc-cv)
   5 minute pause
   0.5 C discharging (3.0 V cc)
   5 minute pause

Using the measured value of the discharging capacity in the 2nd cycle and the measured value of the discharging capacity in the 104th cycle,
the cycle retention rate at 60°C was calculated on the basis of the following equation. Cycle retention rate (%) = (discharging capacity in the 104th cycle/discharging capacity in the 2nd cycle) × 100 (%)

### (3) Amount of increase in reaction resistance

Using the coin cell produced by the method above, measurements were taken under a 25°C environment and the conditions indicated below.
1st cycle:
   0.1 C charging (4.3 V cc-cv)
   5 minute pause
   0.1 C discharging (2.5 V cc)
   5 minute pause
2nd cycle:
   0.1 C charging (4.3 V cc-cv)

The impedance was measured under a 25°C environment and the conditions indicated below using a cell for which the 2nd cycle of charging had been completed. The result thereof was used as the impedance measurement result for the 2nd cycle (reaction resistance at the 2nd cycle (initial reaction resistance)).
Frequency range: 300 k-0.01 Hz (76 points)
Amplitude: 10 mV

Charging and discharging were then performed under a 25°C environment and the conditions indicated below.
2nd cycle:
   0.1 C discharging (3.0 V cc)
   5 minute pause
3rd to 29th cycles:
   0.2 C charging (4.3 V cc-cv)
   5 minute pause
   0.5 C discharging (3.0 V cc)
   5 minute pause
30th cycle:
   0.1 C charging (4.3 V cc-cv)
   5 minute pause
   0.1 C discharging (2.5 V cc)
   5 minute pause
31st cycle:
   0.1 C charging (4.3 V cc-cv)

The impedance was measured under the conditions above using a cell for which the 31st cycle of charging had been completed. The result thereof was used as the impedance measurement result for the 31st cycle (reaction resistance at the 31st cycle).

Using the reaction resistance at the 2nd cycle (initial reaction resistance) (Ω) and the reaction resistance at the 31st cycle (Ω), the amount of increase in the reaction resistance at 25°C was calculated on the basis of the following equation.

Amount of increase in reaction resistance (Ω) = reaction resistance at the 31st cycle - initial reaction resistance

### <Thermogravimetric-differential thermal analysis of positive electrode active material>

Thermogravimetric-differential thermal analysis (TG-DTA) measurements were taken using a TG-DTA apparatus (DTG-60H, produced by Shimadzu Corp.) by the following method under the following conditions.

A coin cell produced by the method above was initially charged (cc-cv) at 0.1 C to 4.3 V under an environment of 25°C to cause 85% (approximately 4.3 V) desorption of the amount of Li in the positive electrode active material. After this, the coin cell in a state of charge was disassembled inside a glove box, and the positive electrode was collected. The collected positive electrode was washed for 10 minutes in DMC and dried under a vacuum. After this, the positive electrode was scraped from an Al foil using a spatula inside the glove box, and a Pt container on a measurement side was filled with 15 mg of the resulting positive electrode material powder and left to stand on a measurement-side balance of the TG-DTA apparatus.
(TG-DTA measurement conditions)
Reference: Pt vessel filled with 15 mg of Al₂O₃
Maximum temperature: 500°C
Temperature increase rate: 5°C/min
Measurement environment: N₂ gas atmosphere (200 mL/min)

Based on the results obtained, a graph was created in which the horizontal axis was temperature and the vertical axis was a time-differentiated value of a weight change (TG) (this value was DTG, corresponding to a heat release rate in the present invention), and numerical values were obtained for the heat release rate produced along with a phase transition apparent in the region of 200°C-350°C, where the temperature at a peak at the time of the heat release was taken as a heat release peak temperature (°C), and the heat release rate at that time was taken as a heat release peak rate (%/min).

### <Production example 1-1: production of precursor composite compound 1>

A nickel sulfate aqueous solution and a manganese sulfate aqueous solution were mixed so that the proportions (molar ratio) of Ni and Mn were Ni:Mn=88:12, and a mixed aqueous solution was obtained. 10 L of pure water to which 300 g of a sodium hydroxide aqueous solution and 500 g of ammonia water had been added was prepared in advance as a mother liquor in a reaction tank, a nitrogen atmosphere was set inside the reaction tank by means of nitrogen gas at a flow rate of 0.7 L/min, and the reaction was also carried out under a nitrogen atmosphere.

After this, the mixed aqueous solution, sodium hydroxide aqueous solution and ammonia water were simultaneously dripped at a predetermined rate while a stirring blade was rotated at 1000 rpm, and, by means of a crystallization reaction in which the dripping amount of alkaline solution was adjusted to achieve a pH of 11.7, the Ni and Mn crystallized and coprecipitated so that agglomerated particles were formed, and a coprecipitate was obtained.

After this, the slurry inside the reactor was subjected to solid-liquid separation and further washed with pure water to thereby reduce residual impurities, after which the coprecipitate in a caked state was dried for 12 hours at 110°C under the atmosphere to obtain precursor composite compound 1.

### <Production example 1-2: production of precursor composite compound 2>

A nickel sulfate aqueous solution, a cobalt sulfate aqueous solution, and a manganese sulfate aqueous solution were mixed so that the proportions (molar ratio) of Ni, Co and Mn were Ni:Co:Mn= 85:10:5, and a mixed aqueous solution was obtained. 10 L of pure water to which 300 g of a sodium hydroxide aqueous solution and 500 g of ammonia water had been added was prepared in advance as a mother liquor in a reaction tank, a nitrogen atmosphere was set inside the reaction tank by means of nitrogen gas at a flow rate of 0.7 L/min, and the reaction was also carried out under a nitrogen atmosphere.

After this, the mixed aqueous solution, sodium hydroxide aqueous solution and ammonia water were simultaneously dripped at a predetermined rate while a stirring blade was rotated at 1000 rpm, and, by means of a crystallization reaction in which the dripping amount of alkaline solution was adjusted to achieve a pH of 11.8, the Ni, Co and Mn crystallized and coprecipitated so that agglomerated particles were formed, and a coprecipitate was obtained.

After this, the slurry inside the reactor was subjected to solid-liquid separation and further washed with pure water to thereby reduce residual impurities, after which the coprecipitate in a caked state was dried for 12 hours at 110°C under the atmosphere to obtain precursor composite compound 2.

### <Production example 2-1-1: production of positive electrode active material particles 1-1>

The precursor composite compound 1 and anhydrous lithium hydroxide were weighed out so that the proportions (molar ratio) of the total amount of Li, Ni and Mn were Li/(Ni+Mn)=1.01, and the materials were mixed using a mixer to prepare a mixture.

The mixture was then fired over 5 hours at a maximum temperature of 750°C under an oxygen atmosphere (oxygen concentration: 97 vol%) using an electric furnace, and positive electrode active material particles (lithium-nickel composite compound) 1-1 were obtained. The mean particle size of primary particles in the positive electrode active material particles 1-1 was approximately 500 nm, and the mean particle size of secondary particles was approximately 12.8 µm.

### <Production example 2-1-2: production of positive electrode active material particles 1-2>

Positive electrode active material particles (lithium-nickel composite compound) 1-2 were obtained in the same way as in production example 2-1-1, except that the mixture was fired at a maximum temperature of 760°C. The mean particle size of primary particles in the positive electrode active material particles 1-2 was approximately 530 nm, and the mean particle size of secondary particles was approximately 12.5 µm.

### <Production example 2-2: production of positive electrode active material particles 2>

The precursor composite compound 2 and anhydrous lithium hydroxide were weighed out so that the proportions (molar ratio) of the total amount of Li, Ni, Co and Mn were Li/(Ni+Co+Mn)=1.035, and the materials were mixed using a mixer to prepare a mixture.

The mixture was then fired over 4 hours at a maximum temperature of 800°C under an oxygen atmosphere (oxygen concentration: 97 vol%) using an electric furnace, and positive electrode active material particles (lithium-nickel composite compound) 2 were obtained. The mean particle size of primary particles in the positive electrode active material particles 2 was approximately 720 nm, and the mean particle size of secondary particles was approximately 11.3 µm.

### <Example A1-1: treatment of positive electrode active material particles 1-1 (production of positive electrode active material)>

### (A1) Slurry formation step

The positive electrode active material particles 1-1 were introduced into pure water (water temperature 25°C) in a reaction tank (10 L capacity) and stirred over 10 minutes to prepare a slurry. Here, the ratio of the amount of positive electrode active material particles 1-1 to the amount of pure water (solid-liquid ratio) was adjusted to 1250 g/L.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.3 mol%. Furthermore, the electrical conductivity of the slurry, which represents the amount of Li eluted into the slurry as a result of the positive electrode active material particles 1-1 being introduced, was 38.2 mS/cm. The pH of the slurry was 11.8 at this time. In light of the above, Li/AI (molar ratio) in the slurry onto which the aluminum sulfate aqueous solution had been dripped was 11.3.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 5.11 wt%.

### (A4) Heat treatment step

The cake-like compound obtained in the filtration step (A3) was subjected to a heat treatment over 60 minutes at 185°C using a vacuum drying apparatus, and the cake-like compound was dried to obtain a positive electrode active material in which an Li-Al hydroxide coating layer was formed on the surface layer of the secondary particles.

The types of compounds constituting the coating layer, the amount of aluminum in the coating layer (with respect to the total amount of positive electrode active material), the thickness of the coating layer, the coefficient of variation of the amount of Al present in the coating layer, and the amount of residual lithium (total amount of Li derived from LiOH and Li₂CO₃) (also collectively referred to below as positive electrode active material characteristics) were determined for the resulting positive electrode active material. The positive electrode active material characteristics are shown in table 2 below. Furthermore, the solid-liquid ratio, amount of aluminum dripped, electrical conductivity of the slurry, moisture content of the cake-like compound, and heat treatment temperature (also collectively referred to below as conditions in each step) are shown in table 1 below.

### <Example A1-2: treatment of positive electrode active material particles 1-1 (production of positive electrode active material)>

### (A1) Slurry formation step

A slurry was prepared in the same way as in example A1-1, except that the stirring time was changed to 10 minutes.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.3 mol%. Furthermore, the electrical conductivity of the slurry was 39.0 mS/cm, and the pH of the slurry at this time was less than approximately 12. In light of the above, Li/AI (molar ratio) in the slurry onto which the aluminum sulfate aqueous solution had been dripped was 11.5.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 5.45 wt%.

A tungsten trioxide powder (element X: W) was added as the X compound to the cake-like compound obtained in the filtration step (A3). The amount of tungsten added (amount of X added) was 0.1 mol%.

### (A4) Heat treatment step

The cake-like compound to which the tungsten trioxide powder had been added was subjected to a heat treatment over 60 minutes at 185°C using a vacuum drying apparatus, and the cake-like compound was dried to obtain a positive electrode active material in which an Li-Al hydroxide coating layer and an Li-W oxide coating layer were formed on the surface layer of the secondary particles.

The characteristics of the resulting positive electrode active material were determined. The characteristics of the positive electrode active materials are shown in table 2, and the conditions in each step, type of element X, and amount of X added are shown in table 1.

### <Example A1-3: treatment of positive electrode active material particles 1-1 (production of positive electrode active material)>

### (A1) Slurry formation step

A slurry was prepared in the same way as in example A1-1, except that the stirring time was changed to 15 minutes.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.3 mol%. Furthermore, the electrical conductivity of the slurry was 39.7 mS/cm, and the pH of the slurry at this time was less than approximately 12. In light of the above, Li/AI (molar ratio) in the slurry onto which the aluminum sulfate aqueous solution had been dripped was 11.7.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 5.11 wt%.

A boric acid powder (element X: B) was added as the X compound to the cake-like compound obtained in the filtration step (A3). The amount of boron added (amount of X added) was 0.6 mol%.

### (A4) Heat treatment step

The cake-like compound to which the boric acid powder had been added was introduced into a saggar and subjected to a heat treatment over 120 minutes at 300°C under an oxygen atmosphere (oxygen concentration: 97 vol%) using an electric furnace, and the cake-like compound was dried to obtain a positive electrode active material in which an Li-Al hydroxide coating layer and an Li-B oxide coating layer were formed on the surface layer of the secondary particles.

The characteristics of the resulting positive electrode active material were determined. The characteristics of the positive electrode active materials are shown in table 2, and the conditions in each step, type of element X, and amount of X added are shown in table 1.

### <Example A1-4: treatment of positive electrode active material particles 1-1 (production of positive electrode active material)>

### (A1) Slurry formation step

A slurry was prepared in the same way as in example A1-1, except that the stirring time was changed to 30 minutes.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.3 mol%. Furthermore, the electrical conductivity of the slurry was 40.3 mS/cm, and the pH of the slurry at this time was less than approximately 12. In light of the above, Li/AI (molar ratio) in the slurry onto which the aluminum sulfate aqueous solution had been dripped was 11.9.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 5.45 wt%.

A tungsten trioxide powder and a boric acid powder (elements X: W and B) were added as the X compounds to the cake-like compound obtained in the filtration step (A3). The amount of tungsten added and the amount of boron added (amount of X added) were 0.1 mol% and 0.6 mol%, respectively.

### (A4) Heat treatment step

The cake-like compound to which the tungsten trioxide powder and boric acid powder had been added was subjected to a heat treatment over 120 minutes at 300°C using a vacuum drying apparatus, and the cake-like compound was dried to obtain a positive electrode active material in which an Li-Al hydroxide coating layer, and an Li-W oxide coating layer and Li-B oxide coating layer were formed on the surface layer of the secondary particles.

The characteristics of the resulting positive electrode active material were determined. The characteristics of the positive electrode active materials are shown in table 2, and the conditions in each step, type of element X, and amount of X added are shown in table 1.

### <Example A1-5: treatment of positive electrode active material particles 1-2 (production of positive electrode active material)>

### (A1) Slurry formation step

A slurry was prepared in the same way as in example A1-1, except that the positive electrode active material particles 1-2 were used instead of the positive electrode active material particles 1-1.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.3 mol%. Furthermore, the electrical conductivity of the slurry, which represents the amount of Li eluted into the slurry as a result of the positive electrode active material particles 1-2 being introduced, was 37.0 mS/cm. The pH of the slurry was less than approximately 12 at this time. In light of the above, Li/AI (molar ratio) in the slurry onto which the aluminum sulfate aqueous solution had been dripped was 10.9.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 5.78 wt%.

### (A4) Heat treatment step

The cake-like compound obtained in the filtration step (A3) was subjected to a heat treatment over 60 minutes at 185°C using a vacuum drying apparatus, and the cake-like compound was dried to obtain a positive electrode active material in which an Li-Al hydroxide coating layer was formed on the surface layer of the secondary particles.

The characteristics of the resulting positive electrode active material were determined. The characteristics of the positive electrode active materials are shown in table 2, and the conditions in each step are shown in table 1.

### <Example A1-6: treatment of positive electrode active material particles 1-2 (production of positive electrode active material)>

### (A1) Slurry formation step

A slurry was prepared in the same way as in example A1-5.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.2 mol%. Furthermore, the electrical conductivity of the slurry was 37.9 mS/cm, and the pH of the slurry at this time was less than approximately 12. In light of the above, Li/AI (molar ratio) in the slurry onto which the aluminum sulfate aqueous solution had been dripped was 16.8.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 3.79 wt%.

A tungsten trioxide powder (element X: W) was added as the X compound to the cake-like compound obtained in the filtration step (A3). The amount of tungsten added (amount of X added) was 0.2 mol%.

### (A4) Heat treatment step

The cake-like compound to which the tungsten trioxide powder had been added was subjected to a heat treatment over 60 minutes at 185°C using a vacuum drying apparatus, and the cake-like compound was dried to obtain a positive electrode active material in which an Li-Al hydroxide coating layer and an Li-W oxide coating layer were formed on the surface layer of the secondary particles.

The characteristics of the resulting positive electrode active material were determined. The characteristics of the positive electrode active materials are shown in table 2, and the conditions in each step, type of element X, and amount of X added are shown in table 1.

### <Example A1-7: treatment of positive electrode active material particles 1-2 (production of positive electrode active material)>

### (A1) Slurry formation step

A slurry was prepared in the same way as in example A1-5.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.6 mol%. Furthermore, the electrical conductivity of the slurry was 33.0 mS/cm, and the pH of the slurry at this time was less than approximately 12. In light of the above, Li/AI (molar ratio) in the slurry onto which the aluminum sulfate aqueous solution had been dripped was 4.9.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 6.55 wt%.

A tungsten trioxide powder (element X: W) was added as the X compound to the cake-like compound obtained in the filtration step (A3). The amount of tungsten added (amount of X added) was 0.2 mol%.

### (A4) Heat treatment step

The cake-like compound to which the tungsten trioxide powder had been added was subjected to a heat treatment over 60 minutes at 185°C using a vacuum drying apparatus, and the cake-like compound was dried to obtain a positive electrode active material in which an Li-Al hydroxide coating layer and an Li-W oxide coating layer were formed on the surface layer of the secondary particles.

The characteristics of the resulting positive electrode active material were determined. The characteristics of the positive electrode active materials are shown in table 2, and the conditions in each step, type of element X, and amount of X added are shown in table 1.

### <Comparative example 1-1: production of positive electrode active material>

Only the amount of residual lithium was determined for the positive electrode active material particles 1-1 (positive electrode active material), without the positive electrode active material particles 1-1 undergoing any of the slurry formation step (A1) - heat treatment step (A4). The results are shown in table 2.

### <Comparative example 1-2: production of positive electrode active material>

### (2) Dripping step

Without performing the slurry formation step (A1), an aluminum sulfate aqueous solution was mixed with the positive electrode active material particles 1-1 with stirring, to obtain a mixture. The aluminum concentration of the aluminum sulfate aqueous solution was 0.75 mol/L, and the amount of aluminum dripped was 0.3 mol%.

### (3) Filtration step

The mixture obtained in the dripping step (2) was filtered using a Büchner funnel, and a cake-like compound was obtained.

### (4) Heat treatment step

The cake-like compound obtained in the filtration step (3) was subjected to a heat treatment over 60 minutes at 185°C using a vacuum drying apparatus, and the cake-like compound was dried to obtain a positive electrode active material.

The characteristics of the resulting positive electrode active material were determined. The characteristics of the positive electrode active materials are shown in table 2, and the conditions in each step are shown in table 1.

### <Comparative example 1-3: production of positive electrode active material>

### (A1) Slurry formation step

A slurry was prepared in the same way as in example A1-1. The electrical conductivity of the slurry was 47.0 mS/cm.

### (3) Filtration step

Without performing the dripping step (A2), the slurry obtained in the slurry formation step (A1) was filtered using a Büchner funnel to obtain a cake-like compound. The moisture content of the cake-like compound was 3.88 wt%.

### (4) Heat treatment step

The cake-like compound obtained in the filtration step (3) was subjected to a heat treatment over 60 minutes at 185°C using a vacuum drying apparatus, and the cake-like compound was dried to obtain a positive electrode active material.

Only the amount of residual lithium was determined for the resulting positive electrode active material. The results are shown in table 2 and the conditions in each step are shown in table 1.

### <Comparative example 1-4: production of positive electrode active material>

### (A1) Slurry formation step

A slurry was prepared in the same way as in example A1-1. The electrical conductivity of the slurry was 45.8 mS/cm.

### (3) Filtration step

Without performing the dripping step (A2), the slurry obtained in the slurry formation step (A1) was filtered using a Büchner funnel to obtain a cake-like compound. The moisture content of the cake-like compound was 3.96 wt%.

A tungsten trioxide powder (element X: W) was added as the X compound to the cake-like compound obtained in the filtration step (3). The amount of tungsten added (amount of X added) was 0.1 mol%.

### (4) Heat treatment step

The cake-like compound to which the tungsten trioxide powder had been added was subjected to a heat treatment over 60 minutes at 185°C using a vacuum drying apparatus, and the cake-like compound was dried to obtain a positive electrode active material.

Only the amount of residual lithium was determined for the resulting positive electrode active material. The results are shown in table 2, and the conditions in each step, type of element X, and amount of X added are shown in table 1.

### <Comparative example 1-5: production of positive electrode active material>

### (A1) Slurry formation step

A slurry was prepared in the same way as in example A1-1. The electrical conductivity of the slurry was 52.0 mS/cm.

### (3) Filtration step

Without performing the dripping step (A2), the slurry obtained in the slurry formation step (A1) was filtered using a Büchner funnel to obtain a cake-like compound. The moisture content of the cake-like compound was 3.93 wt%.

An aluminum hydroxide powder was added to the cake-like compound obtained in the filtration step (3). The amount of aluminum added was 0.3 mol%.

### (4) Heat treatment step

The cake-like compound to which the aluminum hydroxide powder had been added was subjected to a heat treatment over 60 minutes at 185°C using a vacuum drying apparatus, and the cake-like compound was dried to obtain a positive electrode active material.

The characteristics of the resulting positive electrode active material were determined. The characteristics of the positive electrode active materials are shown in table 2, and the conditions in each step are shown in table 1.

### <Comparative example 1-6: production of positive electrode active material>

### (A1) Slurry formation step

A slurry was prepared in the same way as in example A1-1. The electrical conductivity of the slurry was 52.0 mS/cm.

### (3) Filtration step

Without performing the dripping step (A2), the slurry obtained in the slurry formation step (A1) was filtered in the same way as described above to obtain a cake-like compound. The moisture content of the cake-like compound was 3.93 wt%.

An aluminum hydroxide powder and a tungsten trioxide powder serving as the X compound (element X: W) were added to the cake-like compound obtained in the filtration step (3). The amount of aluminum added and the amount of tungsten added (amount of X added) were 0.3 mol% and 0.1 mol%, respectively.

### (4) Heat treatment step

The cake-like compound to which the aluminum hydroxide powder and the tungsten trioxide powder had been added was subjected to a heat treatment over 60 minutes at 185°C using a vacuum drying apparatus, and the cake-like compound was dried to obtain a positive electrode active material.

The characteristics of the resulting positive electrode active material were determined. The characteristics of the positive electrode active materials are shown in table 2, and the conditions in each step are shown in table 1.

### <Example B1-1: treatment of positive electrode active material particles 1-1 (production of positive electrode active material)>

### (B1) Preparation step

Aluminum sulfate was introduced into pure water (water temperature 25°C) being stirred inside a reaction tank (10 L capacity), and an aluminum sulfate aqueous solution was prepared. The amount of pure water was adjusted so that the ratio of the amount of positive electrode active material particles 1-1 introduced in the subsequent slurry formation step (B2) to the amount of pure water (solid-liquid ratio) was 1250 g/L. Furthermore, the aluminum concentration in the resulting aluminum sulfate aqueous solution was 0.75 mol/L, and the pH was approximately 4.6.

### (B2) Slurry formation step

The total amount of the positive electrode active material particles 1-1 was introduced at one time into the aluminum sulfate aqueous solution inside the reaction tank and stirred over 5 minutes to prepare a slurry. The amount of aluminum in the aluminum sulfate aqueous solution into which the positive electrode active material particles 1-1 had been introduced was 0.3 mol%. Furthermore, the electrical conductivity of the slurry, which represents the amount of Li eluted into the slurry as a result of the positive electrode active material particles 1-1 being introduced, was 37.3 mS/cm. The pH of the slurry was 11.7 at this time. In light of the above, Li/AI (molar ratio) in the slurry into which the positive electrode active material particles 1-1 had been introduced was 11.0.

### (B3) Filtration step

The slurry obtained in the slurry formation step (B2) was filtered using a Büchner funnel to obtain a cake-like compound. The moisture content of the cake-like compound was 5.82 wt%.

### (B4) Heat treatment step

The cake-like compound obtained in the filtration step (B3) was subjected to a heat treatment over 60 minutes at 185°C using a vacuum drying apparatus, and the cake-like compound was dried to obtain a positive electrode active material in which an Li-Al hydroxide coating layer was formed on the surface layer of the secondary particles.

The characteristics of the resulting positive electrode active material were determined. The characteristics of the positive electrode active materials are shown in table 2, and the conditions in each step are shown in table 1.

### <Experimental example 1-1: battery characteristics test of nonaqueous electrolyte secondary battery>

The initial charging capacity, initial charging/discharging efficiency, cycle retention rate, and amount of increase in reaction resistance were determined as battery characteristics of nonaqueous electrolyte secondary batteries employing, in the positive electrode thereof, the positive electrode active materials obtained in examples A1-1 to A1-7 and B1-1, and in comparative examples 1-1 to 1-6. The results are shown in table 3.

Furthermore, using the initial reaction resistance and reaction resistance at the 31st cycle determined in each of examples A1-1 to A1-7 and B1-1, and comparative examples 1-1 to 1-6, the reaction resistance at the 31st cycle was plotted against the initial reaction resistance. The graph obtained from these plots is shown in fig. 2.

In addition, fig. 3 shows element information from the surface layer toward the center portion (depth direction) of the secondary particles of the positive electrode active material in example A1-7, obtained by means of Auger electron spectroscopy.

### <Experimental example 1-2: thermogravimetric-differential thermal analysis test of positive electrode active material>

The heat release peak temperature and heat release peak rate were determined for the positive electrode active materials obtained in examples A1-1, A1-2, A1-5 and B1-1, and comparative examples 1-3 to 1-5. The results are shown in table 4.

| Table 1: | | | | | | | |
|---|---|---|---|---|---|---|---|
| | Conditions in each step | | | | | | |
| | Solid-liquid ratio (g/L) | Amount of Al dripped/amount/amount added (mol%) | Electrical conductivity (mS/cm) | content Moisture (wt%) | Element X | | Heat treatment temperature (°C) |
| | | | | | Type | Amount added (mol%) | |
| Example A1-1 | 1250 | 0.3 | 38.2 | 5.11 | - | - | 185 |
| Example A1-2 | 1250 | 0.3 | 39.0 | 5.45 | W | 0.1 | 185 |
| Example A1-3 | 1250 | 0.3 | 39.7 | 5.11 | B | 0.6 | 300 |
| Example A1-4 | 1250 | 0.3 | 40.3 | 5.45 | W/B | 0.1/0.6 | 300 |
| Example A1-5 | 1250 | 0.3 | 37.0 | 5.78 | - | - | 185 |
| Example A1-6 | 1250 | 0.2 | 37.9 | 3.79 | W | 0.2 | 185 |
| Example A1-7 | 1250 | 0.6 | 33.0 | 6.55 | W | 0.2 | 185 |
| Example B1-1 | 1250 | 0.3 | 37.3 | 5.82 | - | - | 185 |
| Comparative Example 1-1 | - | - | - | - | - | - | - |
| Comparative Example 1-2 | - | 0.3 | - | - | - | - | 185 |
| Comparative Example 1-3 | 1250 | - | 47.0 | 3.88 | - | - | 185 |
| Comparative Example 1-4 | 1250 | - | 45.8 | 3.96 | W | 0.1 | 185 |
| Comparative Example 1-5 | 1250 | 0.3 | 52.0 | 3.93 | - | - | 185 |
| Comparative Example 1-6 | 1250 | 0.3 | 52.0 | 3.93 | W | 0.1 | 185 |

**Table 2:**

| | Positive electrode active material characteristics | | | | |
|---|---|---|---|---|---|
| | Coating layer | | | | Amount of residual lithium (wt%) |
| | Type of compound | Amount of Al (mol%) | Thickness (nm) | Coefficient of variation of amount of Al present (%) | |
| Example A1-1 | LiAl₂(OH)₇ | 0.14 | 8 | 24 | 0.05 |
| Example A1-2 | LiAl₂(OH)₇ | 0.10 | 10 | 22 | 0.06 |
| Example A1-3 | LiAl₂(OH)₇ | 0.19 | 16 | 17 | 0.09 |
| Example A1-4 | LiAl₂(OH)₇ | 0.20 | 17 | 21 | 0.10 |
| Example A1-5 | LiAl₂(OH)₇ | 0.27 | 20 | 25 | 0.06 |
| Example A1-6 | LiAl₂(OH)₇ | 0.11 | 12 | 29 | 0.05 |
| Example A1-7 | LiAl₂(OH)₇ | 0.51 | 30 | 15 | 0.04 |
| Example B1-1 | LiAl₂(OH)₇ | 0.28 | 15 | 25 | 0.06 |
| Comparative Example 1-1 | - | - | - | - | 0.34 |
| Comparative Example 1-2 | LiAl₂(OH)₇/Al(OH)₃ | 0.08 | 2 | 38 | 0.11 |
| Comparative Example 1-3 | - | - | - | - | 0.04 |
| Comparative Example 1-4 | - | - | - | - | 0.06 |
| Comparative Example 1-5 | LiAl₂(OH)₇/Al(OH)₃ | 0.30 | - | - | 0.06 |
| Comparative Example 1-6 | LiAl₂(OH)₇/Al(OH)₃ | 0.30 | - | - | 0.07 |

**Table 3:**

| | Battery characteristics of nonaqueous electrolyte secondary battery | | | | | |
|---|---|---|---|---|---|---|
| | Initial charging capacity (mAh/g) | Initial charging/discharging efficiency (%) | Cycle retention rate (%) | Initial reaction resistance (Ω) | Reaction resistance at 31^{st} cycle (Ω) | Amount of increase in reaction resistance (Ω) |
| Example A1-1 | 235.9 | 83.3 | 85.0 | 89 | 169 | 80 |
| Example A1-2 | 234.3 | 84.3 | 56.1 | 28 | 77 | 49 |
| Example A1-3 | 236.7 | 87.1 | 55.6 | 95 | 138 | 43 |
| Example A1-4 | 238.0 | 89.9 | 20.7 | 19 | 55 | 36 |
| Example A1-5 | 234.2 | 84.6 | 63.3 | 65 | 122 | 57 |
| Example A1-6 | 234.5 | 84.0 | 75.1 | 22 | 102 | 80 |
| Example A1-7 | 232.3 | 82.7 | 72.0 | 38 | 91 | 53 |
| Example B1-1 | 234.7 | 85.0 | 65.4 | 62 | 113 | 51 |
| Comparative Example 1-1 | 232.2 | 80.4 | 57.4 | 40 | 89 | 49 |
| Comparative Example 1-2 | 227.7 | 81.1 | 42.5 | 88 | 267 | 179 |
| Comparative Example 1-3 | 234.4 | 81.4 | 48.9 | 236 | 608 | 372 |
| Comparative Example 1-4 | 235.6 | 84.8 | 26.0 | 29 | 110 | 81 |
| Comparative Example 1-5 | 236.2 | 83.0 | 61.8 | 181 | 431 | 250 |
| Comparative Example 1-6 | 235.9 | 83.9 | 49.5 | 56 | 207 | 151 |

**Table 4:**

| | Results of thermogravimetric-differential thermal analysis of positive electrode active material | |
|---|---|---|
| | Heat release peak temperature (°C) | Heat release peak rate (%/min) |
| Example A1-1 | 212 | 1.58 |
| Example A1-2 | 211 | 1.55 |
| Example A1-5 | 211 | 1.53 |
| Example B1-1 | 212 | 1.57 |
| Comparative Example 1-3 | 204 | 1.77 |
| Comparative Example 1-4 | 207 | 1.80 |
| Comparative Example 1-5 | 205 | 1.69 |

In example A1-1, where steps (A1)-(A4) were performed in succession in accordance with treatment method A of the present invention, the amount of increase in reaction resistance was extremely small, while a relatively high initial charging capacity, initial charging/discharging efficiency, and cycle retention rate were maintained. In contrast to this, not only was the cycle retention rate low, there was also a large post-cycling increase in reaction resistance in comparative example 1-2, where the aluminum-containing solution was dripped directly onto the positive electrode active material particles without the slurry formation step (A1) being performed; comparative example 1-3, where the dripping step (A2) of dripping the aluminum-containing solution on the slurry was not performed; and comparative example 1-5, where a powder of the aluminum compound was added to the cake-like compound obtained in the filtration step (3), instead of the dripping step (A2) being performed.

Meanwhile, the conditions (solid-liquid ratio, aluminum concentration, amount of aluminum, stirring time during slurry preparation, and heat treatment temperature and time) in example B1-1, where steps (B1)-(B4) were performed in succession in accordance with treatment method B of the present invention, were the same as the conditions in example A1-1, where steps (A1)-(A4) were performed in succession in accordance with treatment method A of the present invention, and performing the steps (B1) and (B2) in succession in example B1-1 essentially corresponds to performing the steps (A1) and (A2) in reverse order in example A1-1. Example B1-1 also demonstrated an initial charging capacity, initial charging/discharging efficiency, and cycle retention rate comparable with those of example A1-1, and the amount of increase in reaction resistance was extremely small in the same way as in example A1-1.

It can be understood from the above that, by means of both treatment method A of the present invention and treatment method B of the present invention, the Li-Al hydroxide coating layer can be formed more evenly in the state of a thin film by means of extremely fine particles on the surface layer of the secondary particles of the positive electrode active material particles, in addition to which the coating layer can also be selectively formed at the grain boundary portions (interfaces of primary particles) formed by adjacent primary particles located on the outermost surface of the surface layer of the secondary particles in particular, and therefore cracking of the secondary particles (cracking from the grain boundary portions) can be suppressed, and the resulting positive electrode active material is capable of suppressing deterioration of battery characteristics.

Furthermore, a comparison of example A1-2, which is an example where steps (A1)-(A4) were performed in succession in accordance with treatment method A of the present invention, and a tungsten compound, for example, was further added to the cake-like compound obtained in the filtration step (A3), and comparative example 1-4, where a tungsten compound was added to the cake-like compound obtained in the filtration step (3), without the dripping step (A2) of dripping the aluminum-containing solution onto the slurry being performed, shows that example A1-2 had a higher cycle retention rate and a far smaller amount of increase in reaction resistance. It can be understood from the above that, when the Li-Al hydroxide coating layer as in the present invention is provided on the surface layer of the secondary particles of the positive electrode active material particles, and the Li-W oxide coating layer is also formed thereon, the synergistic effect thereof makes it possible to suppress cracking of the secondary particles (cracking from the grain boundary portions), and the resulting positive electrode active material is capable of suppressing deterioration of battery characteristics.

In addition, as shown in fig. 2, comparing the graph obtained from the plots of the examples and the graph obtained from the plots of the comparative examples using the initial reaction resistance and the reaction resistance at the 31st cycle in the examples and comparative examples, where the horizontal axis is the initial reaction resistance and the vertical axis is the reaction resistance at the 31st cycle, it can be seen that the slope of the graph obtained from the examples is more gentle than the slope of the graph obtained from the comparative examples, so the examples can be said to have a smaller rate of increase in reaction resistance at the 31st cycle in relation to the initial reaction resistance than the comparative examples. Accordingly, an increase in resistance can be suppressed when the Li-Al hydroxide coating layer according to the present invention is formed, even if the initial reaction resistance is fairly large, and it can therefore be understood that cracking of the secondary particles (cracking from the grain boundary portions) can be adequately suppressed in the examples, and the resulting positive electrode active material is capable of suppressing deterioration of battery characteristics.

In addition, as shown in fig. 3, it can be understood that in example A1-7, the Li-Al hydroxide coating layer (extremely fine gel comprising Li-Al hydroxide) is present on part of the interfaces of adjacent primary particles located on the outermost surface, among the primary particles constituting the secondary particles.

In addition to these results, the heat release peak temperature shifted more to the high-temperature side, and the heat release peak rate was also lower in examples A1-1, A1-2, A1-5 and B1-1 as compared to comparative examples 1-3 to 1-5, as is also clear from the results of the thermogravimetric-differential thermal analysis test shown in table 4, suggesting dislocation of the crystal structure associated with heat released by the positive electrode active material particles. Although the specifics are unclear, this is thought to be because exothermic reactions of the positive electrode active material particles themselves are suppressed because the heat which is generated by oxygen formation and phase transition associated with reactions of the positive electrode active material particles is absorbed by the Li-Al hydroxide coating layer as in the present invention. In particular, since the Li-Al hydroxide coating layer is a moisture-containing substance, and this coating layer adheres more evenly to the positive electrode active material particles, it is inferred from these results that an effect of increasing thermal stability can be imparted, despite the content of the coating layer being low.

### <Example A2-1: treatment of positive electrode active material particles 2 (production of positive electrode active material)>

### (A1) Slurry formation step

The positive electrode active material particles 2 were introduced into pure water (water temperature 25°C) in a reaction tank (10 L capacity) and stirred over 10 minutes to prepare a slurry. Here, the ratio of the amount of positive electrode active material particles 2 to the amount of pure water (solid-liquid ratio) was adjusted to 1000 g/L.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.1 mol%. Furthermore, the electrical conductivity of the slurry, which represents the amount of Li eluted into the slurry as a result of the positive electrode active material particles 2 being introduced, was 36.3 mS/cm. The pH of the slurry was 11.8 at this time. In light of the above, Li/AI (molar ratio) in the slurry onto which the aluminum sulfate aqueous solution had been dripped was 40.2.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 4.28 wt%.

### (A4) Heat treatment step

The cake-like compound obtained in the filtration step (A3) was subjected to a heat treatment over 60 minutes at 185°C using a vacuum drying apparatus, and the cake-like compound was dried to obtain a positive electrode active material in which an Li-Al hydroxide coating layer was formed on the surface layer of the secondary particles.

The characteristics of the resulting positive electrode active material were determined. The characteristics of the positive electrode active materials are shown in table 6 below, and the conditions in each step are shown in table 5 below.

### <Example A2-2: treatment of positive electrode active material particles 2 (production of positive electrode active material)>

### (A1) Slurry formation step

A slurry was prepared in the same way as in example A2-1.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.6 mol%. Furthermore, the electrical conductivity of the slurry was 26.8 mS/cm, and the pH of the slurry at this time was less than approximately 12. In light of the above, Li/AI (molar ratio) in the slurry onto which the aluminum sulfate aqueous solution had been dripped was 5.0.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 7.35 wt%.

### (A4) Heat treatment step

The cake-like compound obtained in the filtration step (A3) was heat treated in the same way as in example A2-1 to obtain a positive electrode active material in which the Li-Al hydroxide coating layer was formed on the surface layer of the secondary particles.

The characteristics of the resulting positive electrode active material were determined. The characteristics of the positive electrode active materials are shown in table 6, and the conditions in each step are shown in table 5.

### <Example A2-3: treatment of positive electrode active material particles 2 (production of positive electrode active material)>

### (A1) Slurry formation step

A slurry was prepared in the same way as in example A2-1.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.9 mol%. Furthermore, the electrical conductivity of the slurry was 25.5 mS/cm, and the pH of the slurry at this time was less than approximately 12. In light of the above, Li/AI (molar ratio) in the slurry onto which the aluminum sulfate aqueous solution had been dripped was 3.2.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 8.53 wt%.

### (A4) Heat treatment step

The cake-like compound obtained in the filtration step (A3) was heat treated in the same way as in example A2-1 to obtain a positive electrode active material in which the Li-Al hydroxide coating layer was formed on the surface layer of the secondary particles.

The characteristics of the resulting positive electrode active material were determined. The characteristics of the positive electrode active materials are shown in table 6, and the conditions in each step are shown in table 5.

### <Example A2-4: treatment of positive electrode active material particles 2 (production of positive electrode active material)>

### (A1) Slurry formation step

A slurry was prepared in the same way as in example A2-1, except that the stirring time was changed to 5 minutes.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.3 mol%. Furthermore, the electrical conductivity of the slurry was 29.2 mS/cm, and the pH of the slurry at this time was less than approximately 12. In light of the above, Li/AI (molar ratio) in the slurry onto which the aluminum sulfate aqueous solution had been dripped was 10.9.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 7.29 wt%.

### (A4) Heat treatment step

The cake-like compound obtained in the filtration step (A3) was heat treated in the same way as in example A2-1 to obtain a positive electrode active material in which the Li-Al hydroxide coating layer was formed on the surface layer of the secondary particles.

The characteristics of the resulting positive electrode active material were determined. The characteristics of the positive electrode active materials are shown in table 6, and the conditions in each step are shown in table 5.

### <Example A2-5: treatment of positive electrode active material particles 2 (production of positive electrode active material)>

### (A1) Slurry formation step

The positive electrode active material particles 2 were introduced into pure water (water temperature 25°C) in the reaction tank and stirred over 20 minutes to prepare a slurry. Here, the ratio of the amount of positive electrode active material particles 2 to the amount of pure water (solid-liquid ratio) was adjusted to 2000 g/L.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.3 mol%. Furthermore, the electrical conductivity of the slurry was 40.5 mS/cm, and the pH of the slurry at this time was less than approximately 12. In light of the above, Li/AI (molar ratio) in the slurry onto which the aluminum sulfate aqueous solution had been dripped was 7.4.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 4.72 wt%.

### (A4) Heat treatment step

The cake-like compound obtained in the filtration step (A3) was heat treated in the same way as in example A2-1 to obtain a positive electrode active material in which the Li-Al hydroxide coating layer was formed on the surface layer of the secondary particles.

The characteristics of the resulting positive electrode active material were determined. The characteristics of the positive electrode active materials are shown in table 6, and the conditions in each step are shown in table 5.

### <Example A2-6: treatment of positive electrode active material particles 2 (production of positive electrode active material)>

### (A1) Slurry formation step

The positive electrode active material particles 2 were introduced into pure water (water temperature 25°C) in the reaction tank and stirred over 5 minutes to prepare a slurry. Here, the ratio of the amount of positive electrode active material particles 2 to the amount of pure water (solid-liquid ratio) was adjusted to 750 g/L.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.3 mol%. Furthermore, the electrical conductivity of the slurry was 24.3 mS/cm, and the pH of the slurry at this time was less than approximately 12. In light of the above, Li/AI (molar ratio) in the slurry onto which the aluminum sulfate aqueous solution had been dripped was 12.2.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 8.15 wt%.

### (A4) Heat treatment step

The cake-like compound obtained in the filtration step (A3) was heat treated in the same way as in example A2-1 to obtain a positive electrode active material in which the Li-Al hydroxide coating layer was formed on the surface layer of the secondary particles.

The characteristics of the resulting positive electrode active material were determined. The characteristics of the positive electrode active materials are shown in table 6, and the conditions in each step are shown in table 5.

### <Example A2-7: treatment of positive electrode active material particles 2 (production of positive electrode active material)>

### (A1) Slurry formation step

The positive electrode active material particles 2 were introduced into pure water (water temperature 25°C) in the reaction tank and stirred over 10 minutes to prepare a slurry. Here, the ratio of the amount of positive electrode active material particles 2 to the amount of pure water (solid-liquid ratio) was adjusted to 1500 g/L.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.3 mol%. Furthermore, the electrical conductivity of the slurry was 44.6 mS/cm, and the pH of the slurry at this time was less than approximately 12. In light of the above, Li/AI (molar ratio) in the slurry onto which the aluminum sulfate aqueous solution had been dripped was 10.9.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 7.37 wt%.

### (A4) Heat treatment step

The cake-like compound obtained in the filtration step (A3) was subjected to a heat treatment over 120 minutes at 300°C using a vacuum drying apparatus, and the cake-like compound was dried to obtain a positive electrode active material in which an Li-Al hydroxide coating layer was formed on the surface layer of the secondary particles.

The characteristics of the resulting positive electrode active material were determined. The characteristics of the positive electrode active materials are shown in table 6, and the conditions in each step are shown in table 5.

### <Example A2-8: treatment of positive electrode active material particles 2 (production of positive electrode active material)>

### (A1) Slurry formation step

A slurry was prepared in the same way as in example A2-7.

### (A2) Dripping step

An aluminum sulfate aqueous solution was dripped onto the slurry obtained in the slurry formation step (A1) with further stirring. The aluminum concentration of the aluminum sulfate aqueous solution was 0.75 mol/L, and the amount of aluminum dripped was 0.3 mol%. Furthermore, the electrical conductivity of the slurry was 44.6 mS/cm, and the pH of the slurry at this time was less than approximately 12. In light of the above, Li/AI (molar ratio) in the slurry onto which the aluminum sulfate aqueous solution had been dripped was 10.9.

### (A3) Filtration step

The slurry onto which the aluminum sulfate aqueous solution had been dripped in the dripping step (A2) was filtered using a Büchner funnel to obtain a cake-like compound. The moisture content of the cake-like compound was 7.37 wt%.

A boric acid powder (element X: B) was added as the X compound to the cake-like compound obtained in the filtration step (A3). The amount of boron added (amount of X added) was 0.1 mol%.

### (A4) Heat treatment step

The cake-like compound to which the boric acid powder had been added was subjected to a heat treatment over 120 minutes at 300°C using a vacuum drying apparatus, and the cake-like compound was dried to obtain a positive electrode active material.

The characteristics of the resulting positive electrode active material were determined. The characteristics of the positive electrode active materials are shown in table 6, and the conditions in each step, type of element X, and amount of X added are shown in table 5.

### <Comparative example 2-1: production of positive electrode active material>

### (A1) Slurry formation step

A slurry was prepared in the same way as in example A2-1. The electrical conductivity of the slurry was 38.2 mS/cm.

### (3) Filtration step

Without performing the dripping step (A2), the slurry obtained in the slurry formation step (A1) was filtered using a Büchner funnel to obtain a cake-like compound. The moisture content of the cake-like compound was 3.54 wt%.

### (4) Heat treatment step

The cake-like compound obtained in the filtration step (3) was subjected to a heat treatment over 60 minutes at 185°C using a vacuum drying apparatus, and the cake-like compound was dried to obtain a positive electrode active material.

Only the amount of residual lithium was determined for the resulting positive electrode active material. The results are shown in table 6 and the conditions in each step are shown in table 5.

### <Comparative example A2-2 : production of positive electrode active material>

### (A1) Slurry formation step

A slurry was prepared in the same way as in example A2-5, except that the stirring time was changed to 10 minutes. The electrical conductivity of the slurry was 55.7 mS/cm.

### (3) Filtration step

Without performing the dripping step (A2), the slurry obtained in the slurry formation step (A1) was filtered using a Büchner funnel to obtain a cake-like compound. The moisture content of the cake-like compound was 5.69 wt%.

### (4) Heat treatment step

The cake-like compound obtained in the filtration step (3) was subjected to a heat treatment in the same way as in comparative example 2-1, and the cake-like compound was dried to obtain a positive electrode active material.

Only the amount of residual lithium was determined for the resulting positive electrode active material. The results are shown in table 6 and the conditions in each step are shown in table 5.

### <Comparative example 2-3: production of positive electrode active material>

### (A1) Slurry formation step

A slurry was prepared in the same way as in example A2-7. The electrical conductivity of the slurry was 40.8 mS/cm.

### (3) Filtration step

Without performing the dripping step (A2), the slurry obtained in the slurry formation step (A1) was filtered using a Büchner funnel to obtain a cake-like compound. The moisture content of the cake-like compound was 7.84 wt%.

### (4) Heat treatment step

The cake-like compound obtained in the filtration step (3) was subjected to a heat treatment in the same way as in comparative example 2-1, and the cake-like compound was dried to obtain a positive electrode active material.

Only the amount of residual lithium was determined for the resulting positive electrode active material. The results are shown in table 6 and the conditions in each step are shown in table 5.

### <Comparative example 2-4: production of positive electrode active material>

### (A1) Slurry formation step

A slurry was prepared in the same way as in example A2-6, except that the stirring time was changed to 10 minutes. The electrical conductivity of the slurry was 31.4 mS/cm.

### (3) Filtration step

Without performing the dripping step (A2), the slurry obtained in the slurry formation step (A1) was filtered using a Büchner funnel to obtain a cake-like compound. The moisture content of the cake-like compound was 5.08 wt%.

### (4) Heat treatment step

The cake-like compound obtained in the filtration step (3) was subjected to a heat treatment in the same way as in comparative example 2-1, and the cake-like compound was dried to obtain a positive electrode active material.

Only the amount of residual lithium was determined for the resulting positive electrode active material. The results are shown in table 6 and the conditions in each step are shown in table 5.

### <Comparative example 2-5: production of positive electrode active material>

### (A1) Slurry formation step

A slurry was prepared in the same way as in example A2-7. The electrical conductivity of the slurry was 44.6 mS/cm.

### (3) Filtration step

Without performing the dripping step (A2), the slurry obtained in the slurry formation step (A1) was filtered using a Büchner funnel to obtain a cake-like compound. The moisture content of the cake-like compound was 7.37 wt%.

### (4) Heat treatment step

The cake-like compound obtained in the filtration step (3) was subjected to a heat treatment over 60 minutes at 300°C using a vacuum drying apparatus, and the cake-like compound was dried to obtain a positive electrode active material.

Only the amount of residual lithium was determined for the resulting positive electrode active material. The results are shown in table 6 and the conditions in each step are shown in table 5.

### <Example B2-1: treatment of positive electrode active material particles 2 (production of positive electrode active material)>

### (B1) Preparation step

Aluminum sulfate was introduced into pure water (water temperature 25°C) being stirred inside a reaction tank (10 L capacity), and an aluminum sulfate aqueous solution was prepared. The amount of pure water was adjusted so that the ratio of the amount of positive electrode active material particles 2 introduced in the subsequent slurry formation step (B2) to the amount of pure water (solid-liquid ratio) was 1000 g/L. Furthermore, the aluminum concentration in the resulting aluminum sulfate aqueous solution was 0.75 mol/L, and the pH was approximately 4.4.

### (B2) Slurry formation step

The total amount of the positive electrode active material particles 2 was introduced at one time into the aluminum sulfate aqueous solution inside the reaction tank and stirred over 5 minutes to prepare a slurry. The amount of aluminum in the aluminum sulfate aqueous solution into which the positive electrode active material particles 2 had been introduced was 0.3 mol%. Furthermore, the electrical conductivity of the slurry, which represents the amount of Li eluted into the slurry as a result of the positive electrode active material particles 2 being introduced, was 32.5 mS/cm. The pH of the slurry was 11.3 at this time. In light of the above, Li/AI (molar ratio) in the slurry into which the positive electrode active material particles 2 had been introduced was 10.9.

### (B3) Filtration step

The slurry obtained in the slurry formation step (B2) was filtered using a Büchner funnel to obtain a cake-like compound. The moisture content of the cake-like compound was 4.87 wt%.

### (B4) Heat treatment step

The cake-like compound obtained in the filtration step (B3) was subjected to a heat treatment over 60 minutes at 185°C using a vacuum drying apparatus, and the cake-like compound was dried to obtain a positive electrode active material in which an Li-Al hydroxide coating layer was formed on the surface layer of the secondary particles.

The characteristics of the resulting positive electrode active material were determined. The characteristics of the positive electrode active materials are shown in table 6, and the conditions in each step are shown in table 5.

### <Experimental example 2: battery characteristics test of nonaqueous electrolyte secondary battery>

The initial charging capacity, initial charging/discharging efficiency, cycle retention rate, and amount of increase in reaction resistance were determined as battery characteristics of nonaqueous electrolyte secondary batteries employing, in the positive electrode thereof, the positive electrode active materials obtained in examples A2-1 to A2-8 and B2-1, and in comparative examples 2-1 to 2-5. The results are shown in table 7.

**Table 5:**

| | Conditions in each step | | | | | | |
|---|---|---|---|---|---|---|---|
| | Solid-liquid ratio (g/L) | Amount of Al dripped/amount/amount added (mol%) | Electrical conductivity (mS/cm) | Moisture content (wt%) | Element X | | Heat treatment temperature (°C) |
| | | | | | Type | Amount added (mol%) | |
| Example A2-1 | 1000 | 0.1 | 36.3 | 4.28 | - | - | 185 |
| Example A2-2 | 1000 | 0.6 | 26.8 | 7.35 | - | - | 185 |
| Example A2-3 | 1000 | 0.9 | 25.5 | 8.53 | - | - | 185 |
| Example A2-4 | 1000 | 0.3 | 29.2 | 7.29 | - | - | 185 |
| Example A2-5 | 2000 | 0.3 | 40.5 | 4.72 | - | - | 185 |
| Example A2-6 | 750 | 0.3 | 24.3 | 8.15 | - | - | 185 |
| Example A2-7 | 1500 | 0.3 | 44.6 | 7.37 | - | - | 300 |
| Example A2-8 | 1500 | 0.3 | 44.6 | 7.37 | B | 0.1 | 300 |
| Example B2-1 | 1000 | 0.3 | 32.5 | 4.87 | - | - | 185 |
| Comparative Example 2-1 | 1000 | - | 38.2 | 3.54 | - | - | 185 |
| Comparative Example 2-2 | 2000 | - | 55.7 | 5.69 | - | - | 185 |
| Comparative Example 2-3 | 1500 | - | 40.8 | 7.84 | - | - | 185 |
| Comparative Example 2-4 | 750 | - | 31.4 | 5.08 | - | - | 185 |
| Comparative Example 2-5 | 1500 | - | 44.6 | 7.37 | - | - | 300 |

**Table 6:**

| | Positive electrode active material characteristics | | | | |
|---|---|---|---|---|---|
| | Coating layer | | | | Amount of residual lithium (wt%) |
| | Type of compound | Amount of Al (mol%) | Thickness (nm) | Coefficient of variation of amount of Al present (%) | |
| Example A2-1 | LiAl₂(OH)₇ | 0.08 | 9 | 28 | 0.028 |
| Example A2-2 | LiAl₂(OH)₇ | 0.58 | 27 | 23 | 0.028 |
| Example A2-3 | LiAl₂(OH)₇ | 0.86 | 38 | 21 | 0.030 |
| Example A2-4 | LiAl₂(OH)₇ | 0.23 | 18 | 27 | 0.074 |
| Example A2-5 | LiAl₂(OH)₇ | 0.25 | 21 | 25 | 0.052 |
| Example A2-6 | LiAl₂(OH)₇ | 0.04 | 6 | 33 | 0.041 |
| Example A2-7 | LiAl₂(OH)₇ | 0.14 | 15 | 23 | 0.063 |
| Example A2-8 | LiAl₂(OH)₇ | 0.14 | 16 | 22 | 0.137 |
| Example B2-1 | LiAl₂(OH)₇ | 0.22 | 14 | 31 | 0.050 |
| Comparative Example 2-1 | - | - | - | - | 0.045 |
| Comparative Example 2-2 | - | - | - | - | 0.068 |
| Comparative Example 2-3 | - | - | - | - | 0.041 |
| Comparative Example 2-4 | - | - | - | - | 0.039 |
| Comparative Example 2-5 | - | - | - | - | 0.069 |

**Table 7:**

| | Battery characteristics of nonaqueous electrolyte secondary battery | | | | | |
|---|---|---|---|---|---|---|
| | Initial charging capacity (mAh/g) | Initial charging/discharging efficiency (%) | Cycle retention rate (%) | Initial reaction resistance (Ω) | Reaction resistance at 31^{st} cycle (Ω) | Amount of increase in reaction resistance (Ω) |
| Example A2-1 | 228.2 | 91.3 | 95.0 | 31 | 158 | 127 |
| Example A2-2 | 225.7 | 91.4 | 94.2 | 10 | 25 | 15 |
| Example A2-3 | 223.6 | 91.4 | 93.8 | 12 | 31 | 19 |
| Example A2-4 | 228.6 | 92.2 | 92.2 | 10 | 37 | 27 |
| Example A2-5 | 229.7 | 91.6 | 91.8 | 6 | 19 | 14 |
| Example A2-6 | 227.5 | 91.6 | 93.1 | 17 | 73 | 56 |
| Example A2-7 | 229.5 | 90.5 | 92.4 | 6 | 23 | 17 |
| Example A2-8 | 228.2 | 91.0 | 93.9 | 5 | 21 | 15 |
| Example B2-1 | 227.8 | 91.7 | 91.2 | 8 | 40 | 32 |
| Comparative Example 2-1 | 228.3 | 91.7 | 87.0 | 82 | 908 | 826 |
| Comparative Example 2-2 | 229.6 | 91.5 | 88.2 | 35 | 258 | 223 |
| Comparative Example 2-3 | 230.0 | 91.8 | 88.0 | 59 | 509 | 450 |
| Comparative Example 2-4 | 227.3 | 91.4 | 86.5 | 108 | 914 | 807 |
| Comparative Example 2-5 | 225.6 | 91.5 | 89.0 | 63 | 530 | 467 |

A comparison of example A2-1, where steps (A1)-(A4) were performed in succession in accordance with treatment method A of the present invention, and comparative example 2-1, where the dripping step (A2) of dripping the aluminum-containing solution onto the slurry was not performed, shows that the initial charging capacity and the initial charging/discharging efficiency were comparable, but the amount of increase in reaction resistance was far smaller in example A2-1.

Furthermore, the initial charging capacity and the initial charging/discharging efficiency in examples A2-2 to A2-4, where the amount of aluminum dripped in the dripping step (A2) was changed from the amount in example A2-1, were comparable with those of comparative example 2-1, but the amount of increase in reaction resistance was far smaller.

In addition, the initial charging capacity and the initial charging/discharging efficiency in examples A2-5, A2-6 and A2-7, where the solid-liquid ratio in the slurry formation step (A1) was changed from the ratio in example A2-1, were comparable with those of each of comparative examples 2-2, 2-4 and 2-5, but the amount of increase in reaction resistance was far smaller.

Meanwhile, the conditions (solid-liquid ratio, aluminum concentration, amount of aluminum, stirring time during slurry preparation, and heat treatment temperature and time) in example B2-1, where steps (B1)-(B4) were performed in succession in accordance with treatment method B of the present invention, were the same as the conditions in example A2-4, where steps (A1)-(A4) were performed in succession in accordance with treatment method A of the present invention, and performing the steps (B1) and (B2) in succession in example B2-1 essentially corresponds to performing the steps (A1) and (A2) in reverse order in example A2-4. Example B2-1 also demonstrated an initial charging capacity, initial charging/discharging efficiency, and cycle retention rate comparable with those of example A2-4, and the amount of increase in reaction resistance was extremely small in the same way as in example A2-4.

It can be understood from the above that, by means of both treatment method A of the present invention and treatment method B of the present invention, the Li-Al hydroxide coating layer can be formed more evenly in the state of a thin film of extremely fine particles on the surface layer of the secondary particles of the positive electrode active material particles, in addition to which the coating layer can also be selectively formed at the grain boundary portions (interfaces of primary particles) formed by adjacent primary particles located on the outermost surface of the surface layer of the secondary particles in particular, and therefore cracking of the secondary particles (cracking from the grain boundary portions) can be suppressed, and the resulting positive electrode active material is capable of suppressing deterioration of battery characteristics.

### [Industrial Applicability]

The positive electrode active material according to the present invention makes it possible to suppress a deterioration in battery characteristics such as initial charging capacity, initial charging/discharging efficiency, and cycle characteristics (cycle retention rate and amount of increase in reaction resistance), even with repeated use over a long period of time, and is therefore suitable for a positive electrode in a nonaqueous electrolyte secondary battery.

### [Key to Symbols]

1 Secondary particle
2 Surface
3 Li-Al hydroxide coating layer
4 Grain boundary portion
11, 12, 13, 14 Primary particle

## Claims

1. A method for treating positive electrode active material particles comprising a lithium-nickel composite compound having a layered rock-salt structure, which contains lithium, nickel and oxygen, and may also contain other elements in addition to lithium, nickel and oxygen, the method being **characterized by** comprising at least the following steps in succession:
(A1) a slurry formation step in which the lithium-nickel composite compound is introduced into water and stirred to prepare a slurry;
(A2) following the slurry formation step, a dripping step in which an aluminum-containing solution is dripped onto the slurry while the slurry is stirred;
(A3) after completion of the dripping step, a filtration step in which the slurry on which the aluminum-containing solution has been dripped is filtered to obtain a cake-like compound;
and
(A4) a heat treatment step in which the cake-like compound obtained in the filtration step is dried by performing a heat treatment,
and
a coating layer of a hydroxide containing lithium and aluminum is formed on: (a) surfaces of secondary particles of the lithium-nickel composite compound, and
(b) at least part of grain boundary portions (interfaces of primary particles) formed by adjacent primary particles located on the outermost surface, among a plurality of primary particles constituting the secondary particles.

2. The treatment method as claimed in claim 1, wherein, in the slurry formation step, the lithium-nickel composite compound is introduced while adjusting a ratio (solid-liquid ratio) of an amount of the lithium-nickel composite compound to an amount of the water to 750 g/L-2000 g/L.

3. The treatment method as claimed in claim 1 or 2, wherein, in the dripping step, an amount of aluminum dripped in the aluminum-containing solution is 0.01 mol%-1.5 mol%.

4. The treatment method as claimed in any one of claims 1 to 3, wherein, in the dripping step, electrical conductivity of the slurry when the aluminum-containing solution is dripped is 10 mS/cm-100 mS/cm.

5. The treatment method as claimed in any one of claims 1 to 4, wherein the heat treatment is performed at 120°C-350°C in the heat treatment step.

6. A method for treating positive electrode active material particles comprising a lithium-nickel composite compound having a layered rock-salt structure, which contains lithium, nickel and oxygen, and may also contain other elements in addition to lithium, nickel and oxygen, the method being **characterized by** comprising at least the following steps in succession:
(B1) a preparation step in which an aluminum compound is introduced into water and stirred to prepare an aluminum aqueous solution;
(B2) a slurry formation step in which the lithium-nickel composite compound is introduced into the aluminum aqueous solution obtained in the preparation step and stirred to prepare a slurry;
(B3) a filtration step in which the slurry obtained in the slurry formation step is filtered to obtain a cake-like compound; and
(B4) a heat treatment step in which the cake-like compound obtained in the filtration step is dried by performing a heat treatment,
and
a coating layer of a hydroxide containing lithium and aluminum is formed on: (a) surfaces of secondary particles of the lithium-nickel composite compound, and
(b) at least part of grain boundary portions (interfaces of primary particles) formed by adjacent primary particles located on the outermost surface, among a plurality of primary particles constituting the secondary particles.

7. The treatment method as claimed in claim 6, wherein the pH of the aluminum aqueous solution is 1-6 in the preparation step.

8. The treatment method as claimed in claim 6 or 7, wherein, in the slurry formation step, an amount of aluminum in the aluminum aqueous solution into which the lithium-nickel composite compound is introduced is 0.01 mol%-1.5 mol%.

9. The treatment method as claimed in any one of claims 6 to 8, wherein, in the slurry formation step, the total amount of the lithium-nickel composite compound is introduced at one time.

10. The treatment method as claimed in any one of claims 6 to 8, wherein, in the slurry formation step, the total amount of the lithium-nickel composite compound is gradually introduced within a predetermined time.

11. The treatment method as claimed in any one of claims 6 to 10, wherein the pH of the slurry is 9-14 in the slurry formation step.

12. The treatment method as claimed in any one of claims 6 to 11, wherein electrical conductivity of the slurry is 10 mS/cm-100 mS/cm in the slurry formation step.

13. The treatment method as claimed in any one of claims 6 to 12, wherein the heat treatment is performed at 120°C-350°C in the heat treatment step.

14. A positive electrode active material formed by a lithium-nickel composite compound having a layered rock-salt structure, which contains lithium, nickel and oxygen, and may also contain other elements in addition to lithium, nickel and oxygen, wherein
a coating layer of a hydroxide containing lithium and aluminum is formed on: (a) surfaces of secondary particles of the lithium-nickel composite compound, and
(b) at least part of grain boundary portions (interfaces of primary particles) formed by adjacent primary particles located on the outermost surface, among a plurality of primary particles constituting the secondary particles.

15. The positive electrode active material as claimed in claim 14, wherein the thickness of the coating layer of the hydroxide containing lithium and aluminum is 1 nm or greater, and a coefficient of variation of an amount of aluminum present in the coating layer is less than 30%.

16. The positive electrode active material as claimed in claim 14 or 15, wherein the lithium-nickel composite compound has a composition represented by the following formula (I):
LiₐNi_{1-b-c}Co_{b}M_{c}O₂ (I)
(in the formula, M is an element other than Li, Ni, Co or O, 0.95≤a≤1.15, 0≤b≤0.08, and 0≤c≤0.12),
an amount of aluminum in the hydroxide containing lithium and aluminum is 0.01 mol%-1.5 mol% of the total amount of the positive electrode active material, and
an amount of residual lithium determined by neutralization titration is 0.15 wt% or less.

17. A nonaqueous electrolyte secondary battery comprising a positive electrode that contains a positive electrode active material as claimed in any one of claims 14-16.
